# EUROPEAN PATENT SPECIFICATION

(11) **EP 4 195 711 B1**
(45) Date of publication and mention of the grant of the patent: **11.11.2026**
(21) Application number: 21852286.0
(22) Date of filing: 07.06.2021
(51) Int. Cl.: H04L 69/08, H04L 69/321, H04L 69/324, H04L 12/18, H04W 4/06, H04W 76/22, H04L 65/611, H04W 76/40

(54) **UNICAST-MULTICAST CONVERSION**
UNICAST-MULTICAST-UMWANDLUNG
CONVERSION MONODIFFUSION/MULTIDIFFUSION

(30) Priority: 04.08.2020 CN 202010774630
(43) Date of publication of application: 14.06.2023
(73) Proprietor: Datang Mobile Communications Equipment Co., Ltd., Beijing 100085 (CN)
(72) Inventor: ZHANG, Dajun, Beijing 100085 (CN); CHEN, Li, Beijing 100085 (CN)
(74) Representative: Studio Torta S.p.A.
(86) International application number: PCT/CN2021/098714
(87) International publication number: WO 2022/028086

(56) References cited:
- CN-A- 101 170 724
- CN-A- 109 982 266
- CN-A- 110 809 299
- CN-A- 111 901 765
- GB-A- 2 552 705
- US-A1- 2016 227 383
- US-B1- 10 686 558
- DAVID VARGAS ET AL: "RAN Logical Architecture and Interfaces for 5G-Xcast", 28 February 2019 (2019-02-28), pages 1 - 95, XP055646813, Retrieved from the Internet <URL:http://5g-xcast.eu/wp-content/uploads/2019/03/5G-Xcast_D3.3_v2.0_web.pdf> [retrieved on 20191127]
- 3GPP: "3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 14)", 1 January 2017 (2017-01-01), XP055613159, Retrieved from the Internet <URL:https://www.3gpp.org/ftp//Specs/archive/36_series/36.300/36300-e20.zip> [retrieved on 20190815]
- TCL COMMUNICATION LTD.: "Radio Bearer based Multicast PTM and PTP mode switching, R2-2006569", 《3GPP TSG-RAN WG2 #111E》, 7 August 2020 (2020-08-07), XP051911512
- CATT: "Discussion on Dynamic PTM and PTP Switch with Service Continuity, R2-2006594", 《3GPP TSG-RAN WG2 MEETING #111》, 7 August 2020 (2020-08-07), XP051911529
- HUAWEI, HISILICON: "WID revision: NR Multicast and Broadcast Services, RP-201038", 《3GPP TSG RAN MEETING #88-E》, 22 June 2020 (2020-06-22), XP051903704
- QUALCOMM INCORORPORATED: "Solution to KI#7: Mobility between 5G MBS supporting and 5G MBS, S2-2004223", 《SA WG2 MEETING #139E》, 22 May 2020 (2020-05-22), XP051890227

## Description

### TECHNICAL FIELD

The present disclosure relates to wireless communication technology, and specifically, to a unicast multicast conversion method and apparatus, and a processor-readable storage medium.

### BACKGROUND

In the related art, the 4G Multimedia Broadcast Multicast Service (MBMS) technology only allows a core network to initiate mode conversion of receiving MBMS service data packets according to feedback from a User Equipment (UE) and configured strategies, while this kind of mode conversion involves many complex signaling procedures and cannot dynamically and efficiently solve the problem of utilization efficiency of network resources. For example, in Single Cell-Point To Multipoint (SC-PTM) mode signaling flow of the 4G MBMS, the UE needs to read Single Cell-Multicast Common Control Channel (SC-MCCH) information, to obtain scheduling information of Single Cell-Multicast Traffic Control Channel (SC-MTCH), and can receive the MBMS service data packets in idle or connected state. For another example, the MBMS service data packets are received in unicast mode, and unicast transmission of the MBMS service data packets can only be accomplished by a traditional unicast Protocol Data Unit (PDU) session establishment procedure.

5G NR (New Radio), as a new generation of wireless access technology network, also has a demand for multimedia multicast broadcast services. How to realize the conversion of the UE from receiving the MBMS service data packets through a multicast bearer to receiving the MBMS service data packets through a unicast bearer is an issue to be solved.

A contribution by David Vargas et al., titled "RAN Logical Architecture and Interfaces for 5G-Xcast", for the 5G-Xcast project, delivered on November 28th, 2019 , No. D3.3, provides analysis and technical solutions developed in the 5G-Xcast project considering the use cases and technical requirements discussed in deliverables D2.1 and D2.2. The document discloses the 5G RAN logical architecture to deploy flexible multicast radio access network that can support the same services as existing multicast/broadcast networks as well as removing limitations concerning the specifications in L TE Rel-14. The document further evolves the support for high data rate media content, with a seamless switching between unicast and multicast, and develops solutions to deliver terrestrial broadcast services reusing the designed dynamic multicast RAN architecture. It also provides concepts and procedures to deploy multicast in dynamic geographical areas.

Chinese patent application published with No. CN101170724A discloses a method, a system and a device for switching load modes, and aims to solve the problem in the prior art that the user equipment (UE) needs long time from the request to the establishment of point-to-pint (PTP) service when switching from the current packet transfer mode (PTM) to the PTP mode. The method comprises: before the PTM is switched to the PTP mode, the UE reads the system information; and when needing to switch the load mode, the UE sends a PTP request according to the system information to establish RRC connection and wireless load, completing the switch from the PTM service to PTP service. The inventive RNC comprises a message sending unit, a MBMS service transfer unit, and a wireless load establishment message generation unit. The inventive UE comprises a system information read unit, a PTP service request message sending unit and an establishment unit. The inventive system comprises a UE and a RNC. The invention can shorten the time from the request to the establishment of PTP service.

### SUMMARY

The present disclosure provides a unicast multicast conversion method and apparatus, and a processor-readable storage medium for disadvantages of the existing approaches, so as to address the above-mentioned technical defects. The invention is set out in the appended set of claims.

In a first aspect, an embodiment of the present disclosure provides a unicast multicast conversion method performed by a User Equipment (UE), comprising:

receiving a Radio Resource Control (RRC) reconfiguration message sent by a first network node, in case that Multimedia Broadcast Multicast Service (MBMS) service data packets sent by the first network node are received through a multicast bearer;

Reconstructing an MBMS Packet Data Convergence Protocol (MBMS PDCP) entity according to the RRC reconfiguration message, wherein the multicast bearer is converted to a unicast bearer;
sending a reconfiguration completion message to the first network node so that the first network node converts the multicast bearer to a unicast bearer and sends the MBMS service data packets to the UE through the unicast bearer, the reconfiguration completion message being configured to characterize that reconstruction of the MBMS PDCP entity is accomplished by the UE; and
receiving the MBMS service data packets sent by the first network node through the unicast bearer.

Optionally, the configuration of the RRC reconfiguration message includes at least one of the following:
the RRC reconfiguration message includes Data Radio Bearer (DRB) configuration information or Multicast Radio Bearer (MRB) configuration information, the DRB corresponding to the DRB configuration information is in an active state, and the MRB corresponding to the MRB configuration information is in an active state;
the RRC reconfiguration message includes DRB configuration information and MRB configuration information, the DRB corresponding to the DRB configuration information is in an active state, and the MRB corresponding to the MRB configuration information is in an inactive state; and
the RRC reconfiguration message includes DRB configuration information and MRB configuration information, the DRB corresponding to the DRB configuration information is in an inactive state, and the MRB corresponding to the MRB configuration information is in an active state.

Optionally, reconstructing the MBMS PDCP entity according to the RRC reconfiguration message comprises:
constructing data packets that are not received by the UE of multicast PDCP Protocol Data Units (PDUs) according to the RRC reconfiguration message; and storing disordered Service Data Units (SDUs) of a multicast PDCP buffer to a unicast PDCP buffer reconstructed by the UE.

Optionally, if the MBMS service data packets sent by the first network node that are received through the unicast bearer include the corresponding PDCP PDUs, the method further comprises:
processing, via a unicast key and/or a unicast compression mode, the PDCP PDUs corresponding to the MBMS service data packets sent by the first network node through the unicast bearer to obtain the PDCP SDUs.

Optionally, the RRC reconfiguration message includes a bearer conversion indication, which is configured to implicitly indicate to perform the conversion of the multicast bearer to the unicast bearer by configuring a configuration relationship of mapping from an MBMS session to the DRB, or to carry explicit information indicating to perform the conversion of the multicast bearer to the unicast bearer.

In a second aspect, an embodiment of the present disclosure provides a unicast multicast conversion method performed by a network node, comprising:
in case that Multimedia Broadcast Multicast Service, MBMS, service data packets sent by the network node are received by a User Equipment, UE, through a multicast bearer, sending a Radio Resource Control (RRC) reconfiguration message to the UE, the RRC reconfiguration message is configured for the UE to reconstructs a Multimedia Broadcast Multicast Service Packet Data Convergence Protocol (MBMS PDCP) entity;
receiving a reconfiguration completion message sent by the UE, the reconfiguration completion message being configured to characterize that reconstruction of the MBMS PDCP entity is accomplished by the UE;
reconstructing a unicast PDCP entity according to data packets that are not received by the UE included in the reconfiguration completion message, and retransmitting the corresponding PDCP Service Data Units (SDUs), converting a multicast bearer to a unicast bearer; and
sending MBMS service data packets to the UE through the unicast bearer, wherein the RRC reconfiguration message includes a bearer conversion indication for indicating to perform a bearer handover.

Optionally, before sending the RRC reconfiguration message to the UE, the method further comprises:
acquiring first information; and
determining to convert the multicast bearer to the unicast bearer based on the first information, the first information including at least one of the following: the number of UEs, bearer conditions of UEs, and reception status of the MBMS service data packets of UEs, the UE being a UE that receives the MBMS service data packet sent by the first network node.

Optionally, the reconfiguration completion message includes data packets that are not received by the UE.

Optionally, before sending the MBMS service data packets to the UE through the unicast bearer, the method further comprises:
processing, via a unicast key and/or a unicast compression mode, PDCP Service Data Units (SDUs) corresponding to the MBMS service data packets sent through the unicast bearer to obtain PDCP Protocol Data Units (PDUs);
the sending the MBMS service data packets to the UE through the unicast bearer comprises:
   sending the PDCP PDUs to the UE through the unicast bearer.

Optionally, sending the RRC reconfiguration message to the UE includes at least one of the following:
sending the RRC reconfiguration message to the UE via an RRC signaling;
sending the RRC reconfiguration message to the UE via a PDCP control signaling;
sending the RRC reconfiguration message to the UE via a Media Access Control Control Element (MAC CE); and
sending the RRC reconfiguration message to the UE via a control signaling of a physical layer;
wherein the RRC reconfiguration message comprises a bearer conversion indication.

In a third aspect, an embodiment of the present disclosure provides a unicast multicast conversion method, applied to a User Equipment (UE), comprising:
switching from a second network node to a third network node, when Multimedia Broadcast Multicast Service (MBMS) service data packets sent by the second network node are received through a multicast bearer and the UE is in a connected state;
receiving an RRC reconfiguration message sent by the third network node;
reconstructing an MBMS Packet Data Convergence Protocol (MBMS PDCP) entity according to the RRC reconfiguration message;
sending a reconfiguration completion message to the third network node so that the third network node converts the multicast bearer to a unicast bearer and sends the MBMS service data packets to the UE through the unicast bearer, the reconfiguration completion message being configured to characterize that reconstruction of the MBMS PDCP entity is accomplished by the UE; and
receiving the MBMS service data packets sent by the third network node through the unicast bearer.

Optionally, the configuration of the RRC reconfiguration message includes at least one of the following:
the RRC reconfiguration message includes Data Radio Bearer (DRB) configuration information or Multicast Radio Bearer (MRB) configuration information, the DRB corresponding to the DRB configuration information is in an active state, and the MRB corresponding to the MRB configuration information is in an active state;
the RRC reconfiguration message includes DRB configuration information and MRB configuration information, the DRB corresponding to the DRB configuration information is in an active state, and the MRB corresponding to the MRB configuration information is in an inactive state; and
the RRC reconfiguration message includes DRB configuration information and MRB configuration information, the DRB corresponding to the DRB configuration information is in an inactive state, and the MRB corresponding to the MRB configuration information is in an active state.

Optionally, the second network node and the third network node are at least one Distributed Unit (DU) in the same base station, the at least one DU corresponds to at least one cell; or the second network node and the third network node are different base stations.

In a fourth aspect, an embodiment of the present disclosure provides a unicast multicast conversion method, applied to a third network node, wherein the method comprises:
sending a Radio Resource Control (RRC) reconfiguration message to a User Equipment (UE) so that the UE reconstructs a Multimedia Broadcast Multicast Service Packet Data Convergence Protocol (MBMS PDCP) entity according to the RRC reconfiguration message;
receiving a reconfiguration completion message sent by the UE, the reconfiguration completion message being configured to characterize that reconstruction of the MBMS PDCP entity is accomplished by the UE;
reconstructing a unicast PDCP entity according to the reconfiguration completion message, and converting a multicast bearer to a unicast bearer; and
sending MBMS service data packets to the UE through the unicast bearer.

Optionally, before sending the RRC reconfiguration message to the UE, the method further comprises:
acquiring second information; and
determining to convert the multicast bearer to the unicast bearer based on the second information, the second information including at least one of the following: the number of UEs, bearer conditions of UEs, and reception status of the MBMS service data packets of UEs, the UE being a UE that receives the MBMS service data packet sent by the third network node.

In a fifth aspect, an embodiment of the present disclosure provides a unicast multicast conversion apparatus, applied to a User Equipment (UE), comprising a memory, a transceiver, and a processor:
the memory is configured to store a computer program; the transceiver is configured to send and receive data under the control of the processor; the processor is configured to read the computer program in the memory and perform the following actions:
receiving a Radio Resource Control (RRC) reconfiguration message sent by a first network node, when Multimedia Broadcast Multicast Service (MBMS) service data packets sent by the first network node are received through a multicast bearer and the UE is in a connected state;
reconstructing an MBMS Packet Data Convergence Protocol (MBMS PDCP) entity according to the RRC reconfiguration message;
sending a reconfiguration completion message to the first network node so that the first network node converts the multicast bearer to a unicast bearer and sends the MBMS service data packets to the UE through the unicast bearer, the reconfiguration completion message being configured to characterize that reconstruction of the MBMS PDCP entity is accomplished by the UE; and
receiving the MBMS service data packets sent by the first network node through the unicast bearer.

In a sixth aspect, an embodiment of the present disclosure provides a unicast multicast conversion apparatus, applied to a first network node, comprising a memory, a transceiver, and a processor:
the memory is configured to store a computer program; the transceiver is configured to send and receive data under the control of the processor; the processor is configured to read the computer program in the memory and perform the following actions:
sending MBMS service data packets to a User Equipment (UE) in a connected state through a multicast bearer, and sending an RRC reconfiguration message to the UE so that the UE reconstructs an MBMS PDCP entity according to the RRC reconfiguration message;
receiving a reconfiguration completion message sent by the UE, the reconfiguration completion message being configured to characterize that reconstruction of the MBMS PDCP entity is accomplished by the UE;
reconstructing a unicast PDCP entity according to the reconfiguration completion message, and converting a multicast bearer to a unicast bearer; and
sending MBMS service data packets to the UE through the unicast bearer.

In a seventh aspect, an embodiment of the present disclosure provides a unicast multicast conversion apparatus, applied to a User Equipment (UE), comprising a memory, a transceiver, and a processor:
the memory is configured to store a computer program; the transceiver is configured to send and receive data under the control of the processor; the processor is configured to read the computer program in the memory and perform the following actions:
switching from a second network node to a third network node, when Multimedia Broadcast Multicast Service (MBMS) service data packets sent by the second network node are received through a multicast bearer and the UE is in a connected state;
receiving an RRC reconfiguration message sent by the third network node;
reconstructing an MBMS Packet Data Convergence Protocol (MBMS PDCP) entity according to the RRC reconfiguration message;
sending a reconfiguration completion message to the third network node so that the third network node converts the multicast bearer to a unicast bearer and sends the MBMS service data packets to the UE through the unicast bearer, the reconfiguration completion message being configured to characterize that reconstruction of the MBMS PDCP entity is accomplished by the UE; and
receiving the MBMS service data packets sent by the third network node through the unicast bearer.

In an eighth aspect, an embodiment of the present disclosure provides a unicast multicast conversion apparatus, applied to a third network node, comprising a memory, a transceiver, and a processor:
the memory is configured to store a computer program; the transceiver is configured to send and receive data under the control of the processor; the processor is configured to read the computer program in the memory and perform the following actions:
sending a Radio Resource Control (RRC) reconfiguration message to a User Equipment (UE) so that the UE reconstructs a Multimedia Broadcast Multicast Service Packet Data Convergence Protocol (MBMS PDCP) entity according to the RRC reconfiguration message;
receiving a reconfiguration completion message sent by the UE, the reconfiguration completion message being configured to characterize that reconstruction of the MBMS PDCP entity is accomplished by the UE;
reconstructing a unicast PDCP entity according to the reconfiguration completion message, and converting a multicast bearer to a unicast bearer; and
sending MBMS service data packets to the UE through the unicast bearer.

In a ninth aspect, an embodiment of the present disclosure provides a unicast multicast conversion apparatus, applied to a User Equipment (UE), comprising:
a first processing unit configured to receive a Radio Resource Control (RRC) reconfiguration message sent by a first network node, when Multimedia Broadcast Multicast Service (MBMS) service data packets sent by the first network node are received through a multicast bearer and the UE is in a connected state;
a second processing unit configured to reconstruct an MBMS Packet Data Convergence Protocol (MBMS PDCP) entity according to the RRC reconfiguration message;
a third processing unit configured to send a reconfiguration completion message to the first network node so that the first network node converts the multicast bearer to a unicast bearer, and sends the MBMS service data packets to the UE through the unicast bearer, the reconfiguration completion message being configured to characterize that reconstruction of the MBMS PDCP entity is accomplished by the UE; and
a fourth processing unit configured to receive the MBMS service data packets sent by the first network node through the unicast bearer.

In a tenth aspect, an embodiment of the present disclosure provides a unicast multicast conversion apparatus, applied to a first network node, comprising:
a fifth processing unit configured to send a Radio Resource Control (RRC) reconfiguration message to a User Equipment (UE) so that the UE reconstructs a Multimedia Broadcast Multicast Service Packet Data Convergence Protocol (MBMS PDCP) entity according to the RRC reconfiguration message;
a sixth processing unit configured to receive a reconfiguration completion message sent by the UE, the reconfiguration completion message being configured to characterize that reconstruction of the MBMS PDCP entity is accomplished by the UE;
a seventh processing unit configured to reconstruct a unicast PDCP entity according to the reconfiguration completion message, and convert a multicast bearer to a unicast bearer; and
an eighth processing unit configured to send the MBMS service data packets to the UE through the unicast bearer.

In an eleventh aspect, an embodiment of the present disclosure provides a unicast multicast conversion apparatus, applied to a User Equipment (UE), comprising:
a ninth processing unit configured to switch from a second network node to a third network node, when Multimedia Broadcast Multicast Service (MBMS) service data packets sent by the second network node are received through a multicast bearer and the UE is in a connected state;
a tenth processing unit configured to receive a Radio Resource Control (RRC) reconfiguration message sent by the third network node;
an eleventh processing unit configured to reconstruct an MBMS Packet Data Convergence Protocol (MBMS PDCP) entity according to the RRC reconfiguration message;
a twelfth processing unit configured to send a reconfiguration completion message to the third network node so that the third network node converts the multicast bearer to a unicast bearer, and sends the MBMS service data packets to the UE through the unicast bearer, the reconfiguration completion message being configured to characterize that reconstruction of the MBMS PDCP entity is accomplished by the UE; and
a thirteenth processing unit configured to receive the MBMS service data packets sent by the third network node through the unicast bearer.

In a twelfth aspect, an embodiment of the present disclosure provides a unicast multicast conversion apparatus, applied to a third network node, comprising:
a fourteenth processing unit configured to send a Radio Resource Control (RRC) reconfiguration message to a User Equipment (UE) so that the UE reconstructs a Multimedia Broadcast Multicast Service Packet Data Convergence Protocol (MBMS PDCP) entity according to the RRC reconfiguration message;
a fifteenth processing unit configured to receive a reconfiguration completion message sent by the UE, the reconfiguration completion message being configured to characterize that reconstruction of the MBMS PDCP entity is accomplished by the UE;
a sixteenth processing unit configured to reconstruct a unicast PDCP entity according to the reconfiguration completion message, and to convert a multicast bearer to a unicast bearer; and
a seventeenth processing unit configured to send the MBMS service data packets to the UE through the unicast bearer.

In a thirteenth aspect, an embodiment of the present disclosure provides a processor-readable storage medium having stored therein a computer program that, when executed by a processor, causes the processor to perform the method described in the first, second, third, and fourth aspects.

The technical solution according to embodiments of the present disclosure has at least the following beneficial effects:

The UE is realized to convert from receiving the MBMS service data packets through the multicast bearer to receiving the MBMS service data packets through the unicast bearer, and to ensure that no data packets are lost, thereby improving the utilization efficiency of network resources.

Additional aspects and advantages of the present disclosure will be given in part in the description which follows and, will be apparent from the following description, or may be learned by practice of the present disclosure.

### BRIEF DESCRIPTION OF THE DRAWINGS

In order to illustrate the technical solution more clearly in embodiments of the present disclosure, the accompanying drawings needed in the description of the embodiments of the present disclosure will be briefly described below.
FIG. 1 is a schematic diagram of a system architecture according to an embodiment of the present disclosure;
FIG. 2 is a schematic diagram of a flow of a unicast multicast conversion method according to an embodiment of the present disclosure;
FIG. 3 is a schematic diagram of a flow of another unicast multicast conversion method according to an embodiment of the present disclosure;
FIG. 4 is a schematic diagram of a flow of yet another unicast multicast conversion method according to an embodiment of the present disclosure;
FIG. 5 is a schematic diagram of a flow of yet another unicast multicast conversion method according to an embodiment of the present disclosure;
FIG. 6 is a user-plane protocol stack for sending MBMS service data packets on the network side according to an embodiment of the present disclosure;
FIG. 7 is a schematic diagram of the structure of a unicast multicast conversion apparatus according to an embodiment of the present disclosure;
FIG. 8 is a schematic diagram of the structure of a unicast multicast conversion apparatus according to an embodiment of the present disclosure;
FIG. 9 is a schematic diagram of the structure of a unicast multicast conversion apparatus according to an embodiment of the present disclosure;
FIG. 10 is a schematic diagram of the structure of a unicast multicast conversion apparatus according to an embodiment of the present disclosure;
FIG. 11 is a schematic diagram of the structure of a unicast multicast conversion apparatus according to an embodiment of the present disclosure;
FIG. 12 is a schematic diagram of the structure of a unicast multicast conversion apparatus according to an embodiment of the present disclosure;
FIG. 13 is a schematic diagram of the structure of a unicast multicast conversion apparatus according to an embodiment of the present disclosure; and
FIG. 14 is a schematic diagram of the structure of a unicast multicast conversion apparatus according to an embodiment of the present disclosure.

### DETAILED DESCRIPTION

Embodiments of the present disclosure are described in detail below, and examples of said embodiments are shown in the accompanying drawings, where the same or similar numerals indicate the same or similar elements or elements having the same or similar functions throughout. The embodiments described below by reference to the accompanying drawings are exemplary, and are merely intended to explain the present disclosure and not to be construed as a limitation on the present disclosure.

It may be understood by those skilled in the art that, unless specifically stated, the singular forms "a", "one", "said" and "the" as used herein may also include the plural forms. It is to be further understood that the phrasing "comprising" as used in the specification of the present disclosure specifies the presence of the stated features, integers, steps, actions, elements and/or components, but does not preclude the presence or addition of one or more other features, integers, steps, actions, elements, components and/or groups thereof. It should be understood that, when we say that an element is "connected" or "coupled" to the other element, it may be directly connected or coupled to the other element, or there may be intermediate elements. Additionally, "connected" or "coupled" as used herein may include wirelessly connected or wirelessly coupled. The phrasing "and/or" as used herein includes any or all combinations of one or more of the associated listed items.

The term "and/or" in embodiments of the present disclosure describes the association of associated objects and indicates that three relationships may exist, e.g., A and/or B, which may indicate the presence of A alone, both A and B, and B alone. The character "/" generally indicates an "or" relationship between the associated objects before and after. The term "a plurality of" in the embodiments of the present disclosure refers to two or more, and other quantifiers are similar.

The technical solution according to the embodiments of the present disclosure may be applied to a variety of systems, especially 5G systems. For example, the applicable systems may be a Global System for Mobile Communications (GSM) system, a Code Division Multiple Access (CDMA) system, a Wideband Code Division Multiple Access (WCDMA)/General Packet Radio Services (GPRS) system, a Long Term Evolution (LTE) system, an LTE Frequency Division Duplex (FDD) system, an LTE Time Division Duplex (TDD) system, a Long Term Evolution-Advanced (LTE-A) system, a Universal Mobile Telecommunications System (UMTS), a Worldwide Interoperability for Microwave Access (WiMAX) system, a 5G New Radio (NR) system, etc. These various systems each include terminal and network devices. The system may also include a core network part, such as an Evolved Packet System (EPS), a 5G system (5GS), etc.

The technical solution in the embodiments of the present disclosure will be clearly and completely described below in conjunction with the accompanying drawings in the embodiments of the present disclosure. Obviously, the described embodiments are merely a part of the embodiments of the present disclosure, and not all of them. Based on the embodiments in the present disclosure, all other embodiments obtained by a person of ordinary skill in the art without making creative labor fall within the scope of protection of the present disclosure.

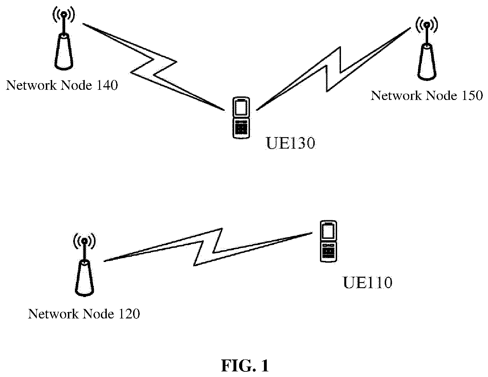

A schematic diagram of a network architecture according to an embodiment of the present disclosure is shown in FIG. 1, the network architecture includes: a UE and network nodes, wherein the UE is, for example, UE110 and UE130 in FIG. 1, the network nodes are, for example, network node 120, network node 140 and network node 150 in FIG. 1. The network nodes are deployed in an access network, e.g., network node 120, network node 140 and network node 150 are deployed in an access network NG-RAN (Next Generation Radio Access Network) in a 5G system. The UE and the network nodes communicate with each other by some air interface technology, e.g., they may communicate with each other by cellular technology.

The UE involved in embodiments of the present disclosure may be devices that provide voice and/or data connectivity to users, handheld devices with wireless connectivity, or other processing devices connected to a wireless modem, etc. The types of UEs include cell phones, vehicle user terminals, tablets, laptops, personal digital assistants, mobile internet devices, wearable devices, etc.

The network nodes involved in embodiments of the present disclosure may be a base station, which may include a plurality of cells that provide services to the UE. Depending on the specific application, the base station may also be referred to as an access point, or may be a device in the access network that communicates with the UE over one or more sectors on an air interface, or other names. The network nodes may be used to interchange the received air frames with Internet Protocol (IP) packets, acting as a router between the UE and the rest of the access network, where the rest of the access network may include an Internet Protocol (IP) communication network. The network nodes may also coordinate the management of attributes of the air interface. For example, the network nodes involved in embodiments of the present disclosure may be a network device (BTS) in Global System for Mobile Communications (GSM) or Code Division Multiple Access (CDMA), a network device (NodeB) in Wideband Code Division Multiple Access (WCDMA), or an evolved network device (evolved Node B, eNB or e-NodeB) in Long Term Evolution (LTE) system, a 5G base station (gNB) in a 5G network architecture (next generation system), or a Home evolved Node B (HeNB), a relay node, a home base station (femto), a pico base station (pico), etc., which are not limited in embodiments of the present disclosure. In some network structures, the network nodes may include centralized unit (CU) nodes and distributed unit (DU) nodes, and the centralized units and distributed units may also be geographically separately arranged.

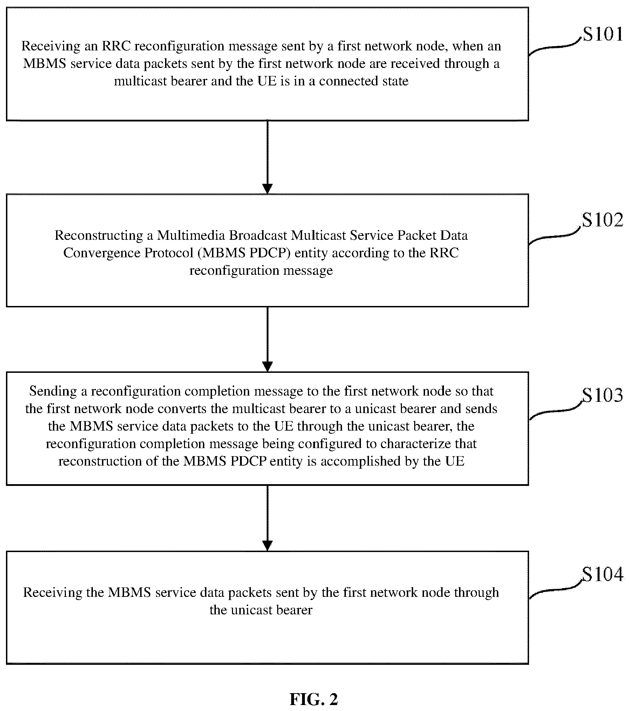

In an embodiment of the present disclosure, there is provided a unicast multicast conversion method, applied to a User Equipment (UE), and a schematic diagram of a flow of the method is shown in FIG. 2, the method comprises:

Step S101: Receiving a Radio Resource Control (RRC) reconfiguration message sent by a first network node, when Multimedia Broadcast Multicast Service (MBMS) service data packets sent by the first network node are received through a multicast bearer and the UE is in a connected state.

Optionally, the UE is UE110 in FIG. 1 and the first network node is network node 120 in FIG. 1.

Optionally, the configuration of the RRC reconfiguration message includes at least one of the following:
the RRC reconfiguration message includes Data Radio Bearer (DRB) configuration information or Multicast Radio Bearer (MRB) configuration information, the DRB corresponding to the DRB configuration information is in an active state, and the MRB corresponding to the MRB configuration information is in an active state;
the RRC reconfiguration message includes DRB configuration information and MRB configuration information, the DRB corresponding to the DRB configuration information is in an active state, and the MRB corresponding to the MRB configuration information is in an inactive state; and
the RRC reconfiguration message includes DRB configuration information and MRB configuration information, the DRB corresponding to the DRB configuration information is in an inactive state, and the MRB corresponding to the MRB configuration information is in an active state.

Optionally, the RRC reconfiguration message includes a bearer conversion indication, which is configured to implicitly indicate to perform the conversion of the multicast bearer to the unicast bearer by configuring a configuration relationship of mapping from an MBMS session to the DRB, or to carry explicit information indicating to perform the conversion of the multicast bearer to the unicast bearer.

Step S102: Reconstructing an MBMS Packet Data Convergence Protocol (MBMS PDCP) entity according to the RRC reconfiguration message.

Optionally, reconstructing the MBMS PDCP entity according to the RRC reconfiguration message comprises:
constructing data packets that are not received by the UE of multicast PDCP Protocol Data Units (PDUs) according to the RRC reconfiguration message; and storing disordered Service Data Units (SDUs) of a multicast PDCP buffer to a unicast PDCP buffer reconstructed by the UE.

Step S103: Sending a reconfiguration completion message to the first network node so that the first network node converts the multicast bearer to a unicast bearer and sends the MBMS service data packets to the UE through the unicast bearer, the reconfiguration completion message being configured to characterize that reconstruction of the MBMS PDCP entity is accomplished by the UE.

Step S104: Receiving the MBMS service data packets sent by the first network node through the unicast bearer.

Optionally, when the MBMS service data packets sent by the first network node that are received through the unicast bearer include the corresponding PDCP PDUs, the method further comprises:
processing, via a unicast key and/or a unicast compression mode, the PDCP PDUs corresponding to the MBMS service data packets sent by the first network node through the unicast bearer to obtain the PDCP SDUs.

The technical solution according to embodiments of the present disclosure has at least the following beneficial effects:

Within the same network node, the UE is realized to convert from receiving the MBMS service data packets through the multicast bearer to receiving the MBMS service data packets through the unicast bearer, and to ensure that no data packets are lost, thereby improving the utilization efficiency of network resources.

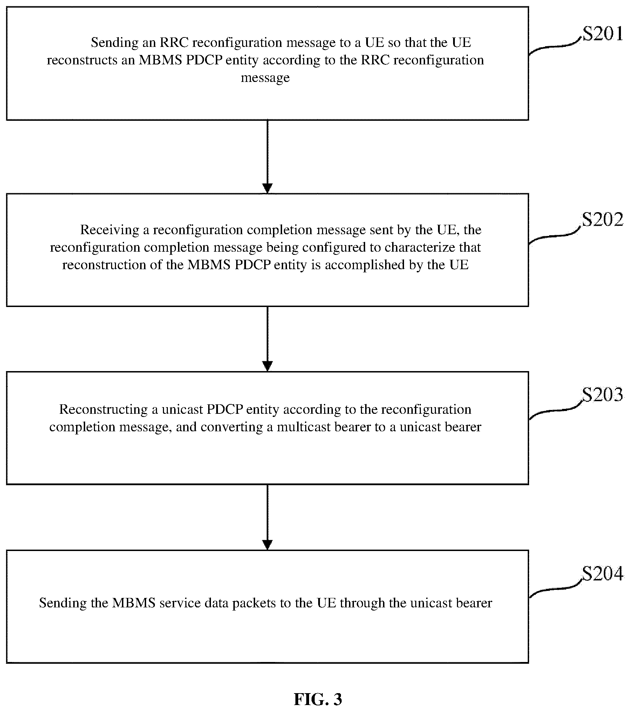

In an embodiment of the present disclosure, there is provided another unicast multicast conversion method, applied to a first network node, and a schematic diagram of a flow of the method is shown in FIG. 3, the method comprises:
Step S201: Sending a Radio Resource Control (RRC) reconfiguration message to a User Equipment (UE) so that the UE reconstructs a Multimedia Broadcast Multicast Service Packet Data Convergence Protocol (MBMS PDCP) entity according to the RRC reconfiguration message;

Optionally, MBMS service data packets are sent to the UE in a connected state through a multicast bearer and an RRC reconfiguration message is sent to the UE so that the UE reconstructs an MBMS PDCP entity according to the RRC reconfiguration message.

Step S202: Receiving a reconfiguration completion message sent by the UE, the reconfiguration completion message is configured to characterize that reconstruction of the MBMS PDCP entity is accomplished by the UE.

Step S203: Reconstructing a unicast PDCP entity according to the reconfiguration completion message, and converting a multicast bearer to a unicast bearer.

Step S204: Sending the MBMS service data packets to the UE through the unicast bearer.

Optionally, before sending the RRC reconfiguration message to the UE, the method further comprises:
acquiring first information; and
determining to convert the multicast bearer to the unicast bearer based on the first information, the first information including at least one of the following: the number of UEs, bearer conditions of UEs, and reception status of the MBMS service data packets of UEs, the UE being a UE that receives the MBMS service data packet sent by the first network node.

Optionally, the reconfiguration completion message includes data packets that are not received by the UE.

Optionally, before sending the MBMS service data packets to the UE through the unicast bearer, the method further comprises:
processing, via a unicast key and/or a unicast compression mode, PDCP Service Data Units (SDUs) corresponding to the MBMS service data packets sent through the unicast bearer to obtain PDCP Protocol Data Units (PDUs);
sending the MBMS service data packets to the UE through the unicast bearer comprises:
sending the PDCP PDUs to the UE through the unicast bearer.

Optionally, sending the RRC reconfiguration message to the UE includes at least one of the following:
sending the RRC reconfiguration message to the UE via an RRC signaling;
sending the RRC reconfiguration message to the UE via a PDCP control signaling;
sending the RRC reconfiguration message to the UE via a Media Access Control Control Element (MAC CE); and
sending the RRC reconfiguration message to the UE via a control signaling of a physical layer;
wherein the RRC reconfiguration message comprises a bearer conversion indication.

The technical solution according to embodiments of the present disclosure has at least the following beneficial effects:
Within the same network node, the UE is realized to convert from receiving the MBMS service data packets through the multicast bearer to receiving the MBMS service data packets through the unicast bearer, and to ensure that no data packets are lost, thereby improving the utilization efficiency of network resources.

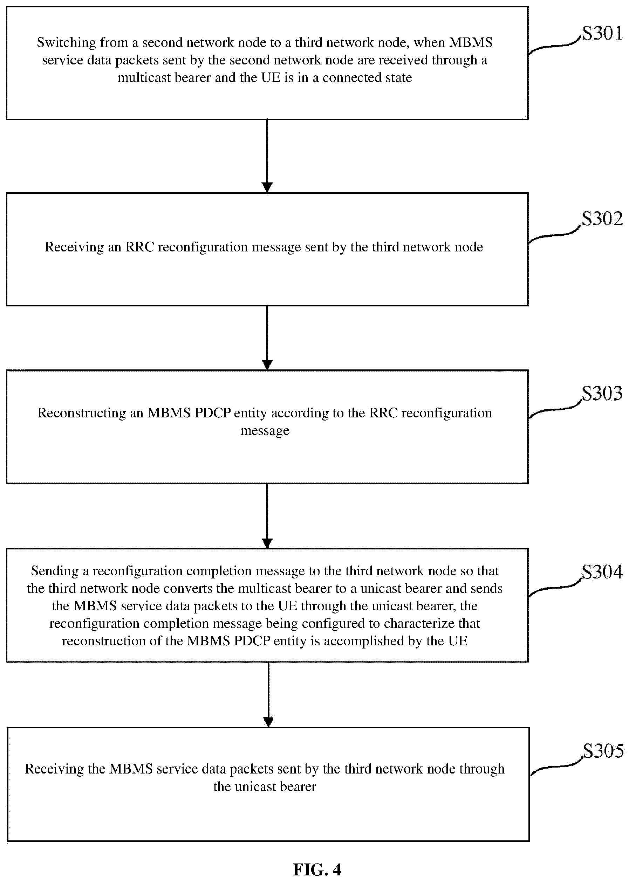

In an embodiment of the present disclosure, there is provided yet another unicast multicast conversion method, applied to a User Equipment (UE), and a schematic diagram of a flow of the method is shown in FIG. 4, the method comprises:
Step S301: Switching from a second network node to a third network node, when Multimedia Broadcast Multicast Service (MBMS) service data packets sent by the second network node are received through a multicast bearer and the UE is in a connected state.

Optionally, the UE is UE130 in FIG. 1, and the second network node and the third network node are network node 140 and network node 150 in FIG. 1, respectively.

Optionally, the second network node and the third network node are at least one Distributed Unit (DU) in the same base station, the at least one DU corresponds to at least one cell; or the second network node and the third network node are different base stations.

Step S302: Receiving a Radio Resource Control (RRC) reconfiguration message sent by the third network node.

Optionally, the configuration of the RRC reconfiguration message includes at least one of the following:
the RRC reconfiguration message includes Data Radio Bearer (DRB) configuration information or Multicast Radio Bearer (MRB) configuration information, the DRB corresponding to the DRB configuration information is in an active state, and the MRB corresponding to the MRB configuration information is in an active state;
the RRC reconfiguration message includes DRB configuration information and MRB configuration information, the DRB corresponding to the DRB configuration information is in an active state, and the MRB corresponding to the MRB configuration information is in an inactive state; and
the RRC reconfiguration message includes DRB configuration information and MRB configuration information, the DRB corresponding to the DRB configuration information is in an inactive state, and the MRB corresponding to the MRB configuration information is in an active state.

Step S303: Reconstructing an MBMS Packet Data Convergence Protocol (MBMS PDCP) entity according to the RRC reconfiguration message.

Step S304: Sending a reconfiguration completion message to the third network node so that the third network node converts the multicast bearer to a unicast bearer and sends the MBMS service data packets to the UE through the unicast bearer, the reconfiguration completion message being configured to characterize that reconstruction of the MBMS PDCP entity is accomplished by the UE.

Step S305: Receiving the MBMS service data packets sent by the third network node through the unicast bearer.

The technical solution according to embodiments of the present disclosure has at least the following beneficial effects:
When the UE switches from the second network node to the third network node, the UE is realized to convert from receiving the MBMS service data packets through the multicast bearer to receiving the MBMS service data packets through the unicast bearer, and to ensure that no data packets are lost, thereby improving the utilization efficiency of network resources.

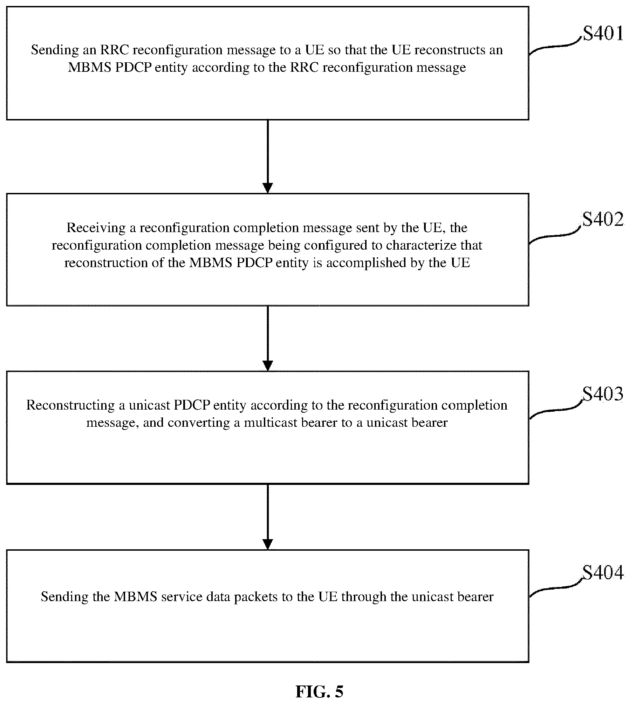

In an embodiment of the present disclosure, there is provided yet another unicast multicast conversion method, applied to a third network node, and a schematic diagram of a flow of the method is shown in FIG. 5, the method comprises:
Step S401: Sending a Radio Resource Control (RRC) reconfiguration message to a User Equipment (UE) so that the UE reconstructs a Multimedia Broadcast Multicast Service Packet Data Convergence Protocol (MBMS PDCP) entity according to the RRC reconfiguration message;
Step S402: Receiving a reconfiguration completion message sent by the UE, the reconfiguration completion message is configured to characterize that reconstruction of the MBMS PDCP entity is accomplished by the UE.
Step S403: Reconstructing a unicast PDCP entity according to the reconfiguration completion message, and converting a multicast bearer to a unicast bearer.
Step S404: Sending the MBMS service data packets to the UE through the unicast bearer.

Optionally, before sending the RRC reconfiguration message to the UE, the method further comprises:
acquiring second information; and
determining to convert the multicast bearer to the unicast bearer based on the second information, the second information including at least one of the following: the number of UEs, bearer conditions of UEs, and reception status of the MBMS service data packets of UEs, the UE being a UE that receives the MBMS service data packet sent by the third network node.

The technical solution according to embodiments of the present disclosure has at least the following beneficial effects:
When the UE switches from the second network node to the third network node, the UE is realized to convert from receiving the MBMS service data packets through the multicast bearer to receiving the MBMS service data packets through the unicast bearer, and to ensure that no data packets are lost, thereby improving the utilization efficiency of network resources.

The unicast multicast conversion methods of the above-mentioned embodiments of the present disclosure are fully introduced in detail by the following embodiments.

A UE in the connected state is receiving a certain MBMS service data packet sent by the network node through the multicast bearer, e.g., SC-PTM mode, and when the network node determines that the UE received the MBMS service data packet through the unicast bearer, the UE achieves lossless transmission conversion of the MBMS service data packet by means of reconstructing the MBMS PDCP entity.

Optionally, after the UE received the RRC reconfiguration message, the UE will perform reconstruction of a downlink MBMS PDCP entity, wherein the RRC reconfiguration message includes a bearer conversion indication, and specifically includes:
(1) The UE is allowed to send a status report of multicast MBMS PDCP Protocol Data Units (PDUs) to the network node, where the status report is data packets not received.
(2) The UE performs a sorting operation on disordered Service Data Units (SDUs) of a multicast PDCP buffer, and new PDCP SDUs received on the unicast bearer of the network node.

Optionally, the order of the PDCP SDUs after the sorting operation is submitted to a high layer.

(3) Optionally, the UE uses a new unicast key and/or unicast compression algorithm to process the newly received PDCP SDUs.

Optionally, the network node reconstructs the unicast PDCP sending entity and retransmits the corresponding PDCP SDUs, based on the data packets reported by the UE that were not received.

Optionally, the network node uses the new unicast key and/or unicast compression algorithm to process the PDCP SDUs to be transmitted.

### In one embodiment of the present disclosure:

Point To Multipoint (PTM) is converted to Point To Point (PTP) within one network node, that is, the UE is converted from receiving the MBMS service data packets through the multicast bearer to receiving the MBMS service data packets through the unicast bearer within the one network node, the network node being the first network node.

The RRC reconfiguration message is configured in an individual manner, for example, the RRC reconfiguration message includes DRB configuration information or MRB configuration information; when the RRC reconfiguration message includes the DRB configuration information, the DRB corresponding to the DRB configuration information is in active state; when the RRC reconfiguration message includes the MRB configuration information, the MRB corresponding to the MRB configuration information is in active state.

Optionally, the first network node is a distributed unit (DU) in a base station, which DU corresponds to one cell; the PTM is converted to the PTP within one network node, that is, the PTM is converted to the PTP within the one cell.

Optionally, the first network node is one base station; the PTM is converted to the PTP within one network node, that is, the PTM is converted to the PTP within the one base station.

Step 0: A UE in the connected state is receiving a certain MBMS service data packet sent by the first network node through a multicast bearer, e.g., SC-PTM mode.

Step 1: The first network node determines that the UE is receiving the MBMS through a unicast bearer based on first information. The first information includes at least one of the following: a certain policy, some statistics, measurement information. The first information is, for example, the number of UEs currently receiving the MBMS service data packet under the first network node, or channel conditions of that particular UE, or reception status of the MBMS service data packet of the UE, etc.

Step 2: The first network node sends the RRC reconfiguration message to that particular UE.

Optionally, the RRC reconfiguration message comprises a bearer conversion indication.

Optionally, the RRC reconfiguration message will implicitly indicate to perform a bearer handover, e.g., from SC-PTM to PTP, by configuring only a configuration relationship of mapping from an MBS session (TMGI, Temporary Mobile Group Identity) to a Data Radio Bearer (DRB); or to carry explicit information, e.g., a conversion indication from the SC-PTM to the DRB, to indicate to perform the bearer handover.

Step 3: Upon receipt of the RRC reconfiguration message, the UE will perform reconstruction of the MBMS PDCP entity, specifically, including, but not limited to, the following steps:

the UE constructs data packets not received of multicast MBMS PDCP PDUs; and

the UE stores disordered SDUs of a multicast PDCP buffer to a unicast PDCP buffer reconstructed.

Optionally, the UE applies a new unicast key and/or unicast compression algorithm to process new PDCP SDUs.

Step 4: Upon receipt of a reconfiguration completion message from the UE, the first network node will perform reconstruction of the unicast PDCP sending entity, specifically, including, but not limited to, the following steps:

The first network node reconstructs a unicast PDCP transmit entity and retransmits the corresponding PDCP SDUs to the UE according to the data packets not received included in the reconfiguration completion message reported by the UE; wherein the unicast PDCP entity includes the unicast PDCP transmit entity.

Optionally, the first network node uses the new unicast key and/or unicast compression algorithm to process the PDCP SDUs to be transmitted.

Step 5: The UE receives the MBMS service data packets through the unicast bearer.

The technical solution according to embodiments of the present disclosure has at least the following beneficial effects:

Within the first network node, the UE is realized to convert from receiving the MBMS service data packets through the multicast bearer to receiving the MBMS service data packets through the unicast bearer, and to ensure that no data packets are lost, thereby improving the utilization efficiency of network resources.

### In one embodiment of the present disclosure:

Point To Multipoint (PTM) is converted to Point To Point (PTP) within one network node, that is, the UE is converted from receiving the MBMS service data packets through the multicast bearer to receiving the MBMS service data packets through the unicast bearer within the one network node, the network node being the first network node.

The RRC reconfiguration message is configured in a simultaneous configuration manner, for example, the RRC reconfiguration message includes DRB configuration information and MRB configuration information, the DRB corresponding to the DRB configuration information is in an active state, and the MRB corresponding to the MRB configuration information is in an inactive state. For another example, the RRC reconfiguration message includes DRB configuration information and MRB configuration information, the DRB corresponding to the DRB configuration information is in an inactive state, and the MRB corresponding to the MRB configuration information is in an active state.

Optionally, the first network node is a distributed unit (DU) in a base station, which DU corresponds to one cell; the PTM is converted to the PTP within one network node, that is, the PTM is converted to the PTP within the one cell.

Optionally, the first network node is one base station; the PTM is converted to the PTP within one network node, that is, the PTM is converted to the PTP within the one base station.

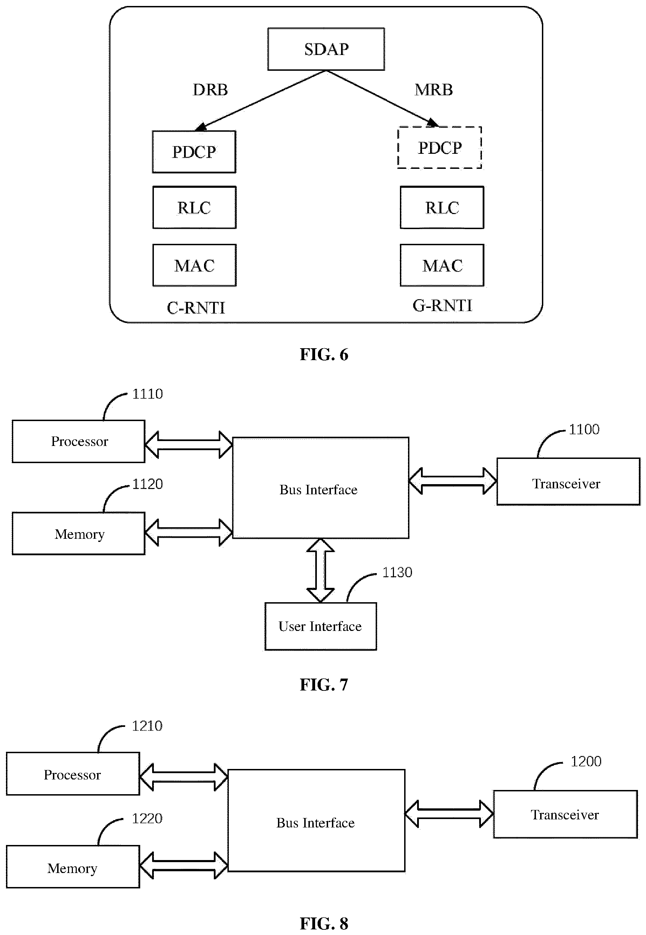

Step 0: For a UE receiving the MBMS service data packets in the connected state, the first network node configures the UE with both the DRB configuration information and the MRB configuration information, where for one MBMS session, the same SDAP layer will be shared, and the specific protocol stack is shown in Figure 6.

Optionally, the user-plane protocol stack for transmission of the MBMS service data packets of the network node is shown in Figure 6. A Service Data Adaptation Protocol (SDAP), a Data Radio Bearer (DRB), a Multicast Radio Bearer (MRB), a Packet Data Convergence Protocol (PDCP), a Radio Link Control (RLC), Medium Access Control (MAC), a Cell-Radio Network Temporary Identifier (C-RNTI), and a Group-Radio Network Temporary Identity (G-RNTI) are included in FIG. 6.

The RRC reconfiguration message explicitly or implicitly specifies that, when the DRB corresponding to the current DRB configuration information is in an active state and the MRB corresponding to the MRB configuration information is in an inactive state, the UE performs the reception of MBMS service data packets.

Step 1: The first network node determines that the UE is receiving the MBMS through a unicast bearer based on first information. The first information includes at least one of the following a certain policy, some statistics, measurement information. The first information is, for example, the number of UEs currently receiving the MBMS service data packet under the first network node, or channel conditions of that particular UE, or reception status of the MBMS service data packet of the UE, etc.

Step 2: The first network node sends the RRC reconfiguration message to that particular UE via an RRC message, PDCP control signaling, MAC CE or control signaling of a physical layer.

Optionally, the RRC reconfiguration message comprises a bearer conversion indication.

Optionally, the RRC reconfiguration message explicitly or implicitly specifies that reconstruction operation of the MBMS PDCP is required.

Step 3: Upon receipt of the RRC reconfiguration message, the UE will perform reconstruction of the MBMS PDCP entity, specifically, including, but not limited to, the following steps:
the UE constructs data packets not received of multicast MBMS PDCP PDUs; and
the UE stores disordered SDUs of a multicast PDCP buffer to a unicast PDCP buffer reconstructed.

Optionally, the UE applies a new unicast key and/or unicast compression algorithm to process new PDCP SDUs.

Step 4: Upon receipt of a reconfiguration completion message from the UE, the first network node will perform reconstruction of the unicast PDCP sending entity, specifically, including, but not limited to, the following steps:

The first network node reconstructs a unicast PDCP transmit entity and retransmits the corresponding PDCP SDUs to the UE according to the data packets not received included in the reconfiguration completion message reported by the UE; wherein the unicast PDCP entity includes the unicast PDCP transmit entity.

Optionally, the first network node uses the new unicast key and/or unicast compression algorithm to process the PDCP SDUs to be transmitted.

Step 5: The UE receives the MBMS service data packets through the unicast bearer.

Within the first network node, the UE is realized to convert from receiving the MBMS service data packets through the multicast bearer to receiving the MBMS service data packets through the unicast bearer, and to ensure that no data packets are lost, thereby improving the utilization efficiency of network resources.

### In one embodiment of the present disclosure:

Point To Multipoint (PTM) is converted to Point To Point (PTP) between two network nodes, that is, the UE uses a multicast bearer to receive MBMS service data packets within the second network node, and when the UE switches from the second network node to the third network node, the UE is converted from receiving the MBMS service data packets through the multicast bearer to receiving the MBMS service data packets through the unicast bearer within the third network node.

The RRC reconfiguration message is configured in an individual manner, for example, the RRC reconfiguration message includes DRB configuration information or MRB configuration information; when the RRC reconfiguration message includes the DRB configuration information, the DRB corresponding to the DRB configuration information is in active state; when the RRC reconfiguration message includes the MRB configuration information, the MRB corresponding to the MRB configuration information is in active state.

Optionally, the second network node and the third network node are a distributed unit (DU) in the same base station respectively, wherein one DU corresponds to one cell; the PTM is converted to the PTP between the two network nodes, that is, the PTM is converted to the PTP between two different cells.

Optionally, the second network node and the third network node are different base stations; the PTM is converted to the PTP between the two network nodes, that is, the PTM is converted to the PTP between two different base stations.

Step 0: A UE in the connected state is receiving a certain MBMS service data packet in the second network node through a multicast bearer, e.g., MRB.

Step 1: When the UE switches from the second network node to the third network node, the third network node determines that the UE is receiving the MBMS via a unicast bearer based on second information. The second information includes at least one of the following: a certain policy, some statistics, measurement information. The second information is, for example, the number of UEs currently receiving the MBMS service data packet under the first network node, or channel conditions of that particular UE, or reception status of the MBMS service data packet of the UE, etc.

Step 2: The third network node sends the RRC reconfiguration message to that particular UE.

Optionally, the RRC reconfiguration message comprises a bearer conversion indication.

Optionally, the RRC reconfiguration message explicitly or implicitly specifies that reconstruction operation of the MBMS PDCP is required.

Step 3: Upon receipt of the RRC reconfiguration message, the UE will perform reconstruction of the MBMS PDCP entity, specifically, including, but not limited to, the following steps:
the UE constructs data packets not received of multicast MBMS PDCP PDUs; and
the UE stores disordered SDUs of a multicast PDCP buffer to a unicast PDCP buffer reconstructed.

Optionally, the UE applies a new unicast key and/or unicast compression algorithm to process new PDCP SDUs.

Step 4: Upon receipt of a reconfiguration completion message from the UE, the third network node will perform reconstruction of the unicast PDCP sending entity, specifically, including, but not limited to, the following steps:

The third network node reconstructs a unicast PDCP transmit entity and retransmits the corresponding PDCP SDUs to the UE according to the data packets not received included in the reconfiguration completion message reported by the UE; wherein the unicast PDCP entity includes the unicast PDCP transmit entity.

Optionally, the third network node uses the new unicast key and/or unicast compression algorithm to process the PDCP SDUs to be transmitted.

Optionally, when the second network node and the third network node are different network nodes, a data forwarding mechanism between the second network node and the third network node is to be triggered.

Step 5: The UE receives the MBMS service data packets sent by the third network node through the unicast bearer.

The technical solution according to embodiments of the present disclosure has at least the following beneficial effects:

When the UE switches from the second network node to the third network node, the UE is realized to convert from receiving the MBMS service data packets through the multicast bearer to receiving the MBMS service data packets through the unicast bearer, and to ensure that no data packets are lost, thereby improving the utilization efficiency of network resources.

In an embodiment of the present disclosure:

Point To Multipoint (PTM) is converted to Point To Point (PTP) between two network nodes, that is, the UE uses a multicast bearer to receive MBMS service data packets within the second network node, and when the UE switches from the second network node to the third network node, the UE is converted from receiving the MBMS service data packets through the multicast bearer to receiving the MBMS service data packets through the unicast bearer within the third network node.

The RRC reconfiguration message is configured in a simultaneous configuration manner, for example, the RRC reconfiguration message includes DRB configuration information and MRB configuration information, the DRB corresponding to the DRB configuration information is in an active state, and the MRB corresponding to the MRB configuration information is in an inactive state. For another example, the RRC reconfiguration message includes DRB configuration information and MRB configuration information, the DRB corresponding to the DRB configuration information is in an inactive state, and the MRB corresponding to the MRB configuration information is in an active state.

Optionally, the second network node and the third network node are a distributed unit (DU) in the same base station respectively, wherein one DU corresponds to one cell; the PTM is converted to the PTP between the two network nodes, that is, the PTM is converted to the PTP between two different cells.

Optionally, the second network node and the third network node are different base stations; the PTM is converted to the PTP between the two network nodes, that is, the PTM is converted to the PTP between two different base stations.

Step 0: For a UE receiving the MBMS service data packets in the connected state, the second network node configures the UE with both the DRB configuration information and the MRB configuration information, where for one MBMS session, the same SDAP layer will be shared, and the specific protocol stack is shown in Figure 6.

The RRC reconfiguration message explicitly or implicitly specifies that, when the DRB corresponding to the current DRB configuration information is in an active state and the MRB corresponding to the MRB configuration information is in an inactive state, the UE performs the reception of MBMS service data packets.

Step 1: When the UE switches from the second network node to the third network node, the third network node determines that the UE is receiving the MBMS via a unicast bearer based on second information. The second information includes at least one of the following: a certain policy, some statistics, measurement information. The second information is, for example, the number of UEs currently receiving the MBMS service data packet under the first network node, or channel conditions of that particular UE, or reception status of the MBMS service data packet of the UE, etc.

Step 2: The third network node sends the RRC reconfiguration message to that particular UE.

Optionally, the RRC reconfiguration message comprises a bearer conversion indication.

Optionally, the RRC reconfiguration message explicitly or implicitly specifies that reconstruction operation of the MBMS PDCP is required.

Step 3: Upon receipt of the RRC reconfiguration message, the UE will perform reconstruction of the MBMS PDCP entity, specifically, including, but not limited to, the following steps:
the UE constructs data packets not received of multicast MBMS PDCP PDUs; and
the UE stores disordered SDUs of a multicast PDCP buffer to a unicast PDCP buffer reconstructed.

Optionally, the UE applies a new unicast key and/or unicast compression algorithm to process new PDCP SDUs.

Step 4: Upon receipt of a reconfiguration completion message from the UE, the third network node will perform reconstruction of the unicast PDCP sending entity, specifically, including, but not limited to, the following steps:
The third network node reconstructs a unicast PDCP transmit entity and retransmits the corresponding PDCP SDUs to the UE according to the data packets not received included in the reconfiguration completion message reported by the UE; wherein the unicast PDCP entity includes the unicast PDCP transmit entity.

Optionally, the third network node uses the new unicast key and/or unicast compression algorithm to process the PDCP SDUs to be transmitted.

Optionally, when the second network node and the third network node are different network nodes, a data forwarding mechanism between the second network node and the third network node is to be triggered.

Step 5: The UE receives the MBMS service data packets sent by the third network node through the unicast bearer.

The technical solution according to embodiments of the present disclosure has at least the following beneficial effects:
When the UE switches from the second network node to the third network node, the UE is realized to convert from receiving the MBMS service data packets through the multicast bearer to receiving the MBMS service data packets through the unicast bearer, and to ensure that no data packets are lost, thereby improving the utilization efficiency of network resources.

Based on the same inventive concept, an embodiment of the present disclosure also provides a unicast multicast conversion apparatus, applied to a User Equipment (UE), which apparatus has a schematic structure as shown in FIG. 7, wherein a transceiver 1100 is configured to receive and send data under the control of a processor 1110.

In FIG. 7, the bus architecture may include any number of interconnected buses and bridges, specifically various circuits of one or more processors represented by the processor 1110 and a memory represented by the memory 1120 are linked together. The bus architecture may also link together various other circuits such as peripherals, voltage regulators, and power management circuits, which are well known in the art and, therefore, will not be further described herein. The bus interface provides an interface. The transceiver 1100 may be a plurality of elements, i.e., including a transmitter and a receiver, providing units for communicating with various other apparatus over transmission media, which include transmission media such as wireless channels, wired channels, fiber optic cables, etc. For different user devices, the user interface 1130 can also be an interface capable of external and internal connection of the required devices, the connected devices include, but not limited to, keyboards, monitors, speakers, microphones, joysticks, etc.

The processor 1110 is responsible for managing the bus architecture and usual processing, and the memory 1120 may store the data used in performing actions by the processor 1110.

Optionally, the processor 1110 may be a Central Processing Unit (CPU), an Application Specific Integrated Circuit (ASIC), a Field Programmable Gate Array (FPGA), or a Complex Programmable Logic Device (CPLD), and the processor may also have a multi-core architecture.

The processor is configured by calling a computer program stored in the memory to execute the method described in the first aspect according to an embodiment of the present disclosure in accordance with the obtained executable instructions. The processor and the memory may also be physically arranged separately.

The processor 1110 is configured to read the computer program in the memory 1120 and perform the following actions.
receiving a Radio Resource Control (RRC) reconfiguration message sent by a first network node, when Multimedia Broadcast Multicast Service (MBMS) service data packets sent by the first network node are received through a multicast bearer and the UE is in a connected state;
Reconstructing an MBMS Packet Data Convergence Protocol (MBMS PDCP) entity according to the RRC reconfiguration message;
sending a reconfiguration completion message to the first network node so that the first network node converts the multicast bearer to a unicast bearer and sends the MBMS service data packets to the UE through the unicast bearer, the reconfiguration completion message being configured to characterize that reconstruction of the MBMS PDCP entity is accomplished by the UE; and
receiving the MBMS service data packets sent by the first network node through the unicast bearer.

Optionally, the configuration of the RRC reconfiguration message includes at least one of the following:
the RRC reconfiguration message includes Data Radio Bearer (DRB) configuration information or Multicast Radio Bearer (MRB) configuration information, the DRB corresponding to the DRB configuration information is in an active state, and the MRB corresponding to the MRB configuration information is in an active state;
the RRC reconfiguration message includes DRB configuration information and MRB configuration information, the DRB corresponding to the DRB configuration information is in an active state, and the MRB corresponding to the MRB configuration information is in an inactive state; and
the RRC reconfiguration message includes DRB configuration information and MRB configuration information, the DRB corresponding to the DRB configuration information is in an inactive state, and the MRB corresponding to the MRB configuration information is in an active state.

Optionally, reconstructing the MBMS PDCP entity according to the RRC reconfiguration message comprises:
constructing data packets that are not received by the UE of multicast PDCP Protocol Data Units (PDUs) according to the RRC reconfiguration message; and storing disordered Service Data Units (SDUs) of a multicast PDCP buffer to a unicast PDCP buffer reconstructed by the UE.

Optionally, when the MBMS service data packets sent by the first network node that are received through the unicast bearer include the corresponding PDCP PDUs, the method further comprises:
processing, via a unicast key and/or a unicast compression mode, the PDCP PDUs corresponding to the MBMS service data packets sent by the first network node through the unicast bearer to obtain the PDCP SDUs.

Optionally, the RRC reconfiguration message includes a bearer conversion indication, which is configured to implicitly indicate to perform the conversion of the multicast bearer to the unicast bearer by configuring a configuration relationship of mapping from an MBMS session to the DRB, or to carry explicit information indicating to perform the conversion of the multicast bearer to the unicast bearer.

It should be noted here that the above apparatus according to embodiments of the present invention can achieve all method steps implemented in embodiments of the above method, and can achieve the same technical effects, and the same parts and beneficial effects in the present embodiment as the method embodiment will not be specifically detailed herein.

Based on the same inventive concept, an embodiment of the present disclosure also provides a unicast multicast conversion apparatus, applied to a first network node, which apparatus has a schematic structure as shown in FIG. 8, wherein a transceiver 1200 is configured to receive and send data under the control of a processor 1210.

In FIG. 8, the bus architecture may include any number of interconnected buses and bridges, specifically various circuits of one or more processors represented by the processor 1210 and a memory represented by the memory 1220 are linked together. The bus architecture may also link together various other circuits such as peripherals, voltage regulators, and power management circuits, which are well known in the art and, therefore, will not be further described herein. The bus interface provides an interface. The transceiver 1200 may be a plurality of elements, i.e., including a transmitter and a receiver, providing units for communicating with various other apparatus over transmission media, which include transmission media such as wireless channels, wired channels, fiber optic cables, etc. The processor 1210 is responsible for managing the bus architecture and usual processing, and the memory 1220 may store the data used in performing actions by the processor 1210.

The processor 1210 may be a Central Processing Unit (CPU), an Application Specific Integrated Circuit (ASIC), a Field Programmable Gate Array (FPGA), or a Complex Programmable Logic Device (CPLD), and the processor may also have a multi-core architecture.

The processor 1210 is configured to read the computer program in the memory and perform the following actions:
sending a Radio Resource Control (RRC) reconfiguration message to a User Equipment (UE) so that the UE reconstructs a Multimedia Broadcast Multicast Service Packet Data Convergence Protocol (MBMS PDCP) entity according to the RRC reconfiguration message;
receiving a reconfiguration completion message sent by the UE, the reconfiguration completion message being configured to characterize that reconstruction of the MBMS PDCP entity is accomplished by the UE;
reconstructing a unicast PDCP entity according to the reconfiguration completion message, and converting a multicast bearer to a unicast bearer; and
sending MBMS service data packets to the UE through the unicast bearer.

Optionally, the reconfiguration completion message includes data packets that not received by the UE.

Optionally, before sending the MBMS service data packets to the UE through the unicast bearer, the method further comprises:
processing, via a unicast key and/or a unicast compression mode, PDCP Service Data Units (SDUs) corresponding to the MBMS service data packets sent through the unicast bearer to obtain PDCP Protocol Data Units (PDUs);
the sending the MBMS service data packets to the UE through the unicast bearer comprises:
   sending the PDCP PDUs to the UE through the unicast bearer.

Optionally, sending the RRC reconfiguration message to the UE includes at least one of the following:
sending the RRC reconfiguration message to the UE via an RRC signaling;
sending the RRC reconfiguration message to the UE via a PDCP control signaling;
sending the RRC reconfiguration message to the UE via a Media Access Control Control Element (MAC CE); and
sending the RRC reconfiguration message to the UE via a control signaling of a physical layer;
wherein the RRC reconfiguration message comprises a bearer conversion indication.

It should be noted here that the above apparatus according to embodiments of the present invention can achieve all method steps implemented in embodiments of the above method, and can achieve the same technical effects, and the same parts and beneficial effects in the present embodiment as the method embodiment will not be specifically detailed herein.

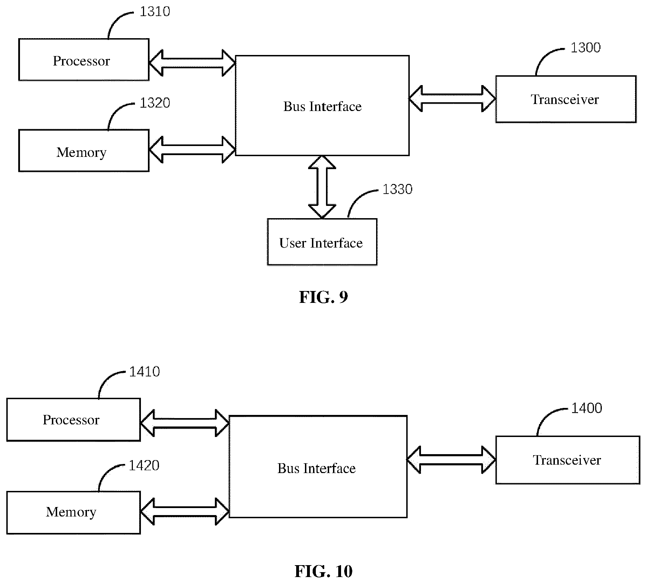

Based on the same inventive concept, an embodiment of the present disclosure also provides a unicast multicast conversion apparatus, applied to a User Equipment (UE), which apparatus has a schematic structure as shown in FIG. 9, wherein a transceiver 1300 is configured to receive and send data under the control of a processor 1310.

In FIG. 9, the bus architecture may include any number of interconnected buses and bridges, specifically various circuits of one or more processors represented by the processor 1310 and a memory represented by the memory 1320 are linked together. The bus architecture may also link together various other circuits such as peripherals, voltage regulators, and power management circuits, which are well known in the art and, therefore, will not be further described herein. The bus interface provides an interface. The transceiver 1300 may be a plurality of elements, i.e., including a transmitter and a receiver, providing units for communicating with various other apparatus over transmission media, which include transmission media such as wireless channels, wired channels, fiber optic cables, etc. For different user devices, the user interface 1330 can also be an interface capable of external and internal connection of the required devices, the connected devices include, but not limited to, keyboards, monitors, speakers, microphones, joysticks, etc.

The processor 1310 is responsible for managing the bus architecture and usual processing, and the memory 1320 may store the data used in performing actions by the processor 1310.

Optionally, the processor 1310 may be a Central Processing Unit (CPU), an Application Specific Integrated Circuit (ASIC), a Field Programmable Gate Array (FPGA), or a Complex Programmable Logic Device (CPLD), and the processor may also have a multi-core architecture.

The processor is configured by calling a computer program stored in the memory to execute the method described in the third aspect according to an embodiment of the present disclosure in accordance with the obtained executable instructions. The processor and the memory may also be physically arranged separately.

The processor 1310 is configured to read the computer program in the memory 1320 and perform the following actions.
switching from a second network node to a third network node, when Multimedia Broadcast Multicast Service (MBMS) service data packets sent by the second network node are received through a multicast bearer and the UE is in a connected state;
receiving an RRC reconfiguration message sent by the third network node;
reconstructing an MBMS Packet Data Convergence Protocol (MBMS PDCP) entity according to the RRC reconfiguration message;
sending a reconfiguration completion message to the third network node so that the third network node converts the multicast bearer to a unicast bearer and sends the MBMS service data packets to the UE through the unicast bearer, the reconfiguration completion message being configured to characterize that reconstruction of the MBMS PDCP entity is accomplished by the UE; and
receiving the MBMS service data packets sent by the third network node through the unicast bearer.

Optionally, the configuration of the RRC reconfiguration message includes at least one of the following:
the RRC reconfiguration message includes Data Radio Bearer (DRB) configuration information or Multicast Radio Bearer (MRB) configuration information, the DRB corresponding to the DRB configuration information is in an active state, and the MRB corresponding to the MRB configuration information is in an active state;
the RRC reconfiguration message includes DRB configuration information and MRB configuration information, the DRB corresponding to the DRB configuration information is in an active state, and the MRB corresponding to the MRB configuration information is in an inactive state; and
the RRC reconfiguration message includes DRB configuration information and MRB configuration information, the DRB corresponding to the DRB configuration information is in an inactive state, and the MRB corresponding to the MRB configuration information is in an active state.

Optionally, the second network node and the third network node are at least one Distributed Unit (DU) in the same base station respectively, and the at least one DU corresponds to at least one cell; or the second network node and the third network node are different base stations.

It should be noted here that the above apparatus according to embodiments of the present invention can achieve all method steps implemented in embodiments of the above method, and can achieve the same technical effects, and the same parts and beneficial effects in the present embodiment as the method embodiment will not be specifically detailed herein.

Based on the same inventive concept, an embodiment of the present disclosure also provides a unicast multicast conversion apparatus, applied to a third network node, which apparatus has a schematic structure as shown in FIG. 10, wherein a transceiver 1400 is configured to receive and send data under the control of a processor 1410.

In FIG. 10, the bus architecture may include any number of interconnected buses and bridges, specifically various circuits of one or more processors represented by the processor 1410 and a memory represented by the memory 1420 are linked together. The bus architecture may also link together various other circuits such as peripherals, voltage regulators, and power management circuits, which are well known in the art and, therefore, will not be further described herein. The bus interface provides an interface. The transceiver 1400 may be a plurality of elements, i.e., including a transmitter and a receiver, providing units for communicating with various other apparatus over transmission media, which include transmission media such as wireless channels, wired channels, fiber optic cables, etc. The processor 1410 is responsible for managing the bus architecture and usual processing, and the memory 1420 may store the data used in performing actions by the processor 1410.

The processor 1410 may be a Central Processing Unit (CPU), an Application Specific Integrated Circuit (ASIC), a Field Programmable Gate Array (FPGA), or a Complex Programmable Logic Device (CPLD), and the processor may also have a multi-core architecture.

The processor 1410 is configured to read the computer program in the memory and perform the following actions:
sending a Radio Resource Control (RRC) reconfiguration message to a User Equipment (UE) so that the UE reconstructs a Multimedia Broadcast Multicast Service Packet Data Convergence Protocol (MBMS PDCP) entity according to the RRC reconfiguration message;
receiving a reconfiguration completion message sent by the UE, the reconfiguration completion message being configured to characterize that reconstruction of the MBMS PDCP entity is accomplished by the UE;
reconstructing a unicast PDCP entity according to the reconfiguration completion message, and converting a multicast bearer to a unicast bearer; and
sending MBMS service data packets to the UE through the unicast bearer.

Optionally, before the sending the RRC reconfiguration message to the UE, the method further comprises:
acquiring a second information; and
determining to convert the multicast bearer to the unicast bearer based on the second information, the second information including at least one of the following: the number of UEs, bearer conditions of UEs, and reception status of the MBMS service data packets of UEs, the UE being a UE that receives the MBMS service data packet sent by the third network node.

It should be noted here that the above apparatus according to embodiments of the present invention can achieve all method steps implemented in embodiments of the above method, and can achieve the same technical effects, and the same parts and beneficial effects in the present embodiment as the method embodiment will not be specifically detailed herein.

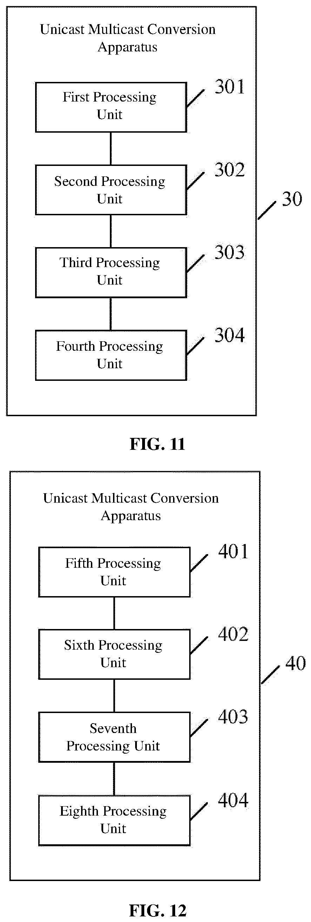

Based on the same inventive concept of the aforementioned embodiments, an embodiment of the present disclosure also provides a unicast multicast conversion apparatus, applied to a User Equipment (UE), which apparatus has a schematic structure as shown in FIG. 11, and the unicast multicast conversion apparatus 30 includes a first processing unit 301, a second processing unit 302, a third processing unit 303, and a fourth processing unit 304.

The first processing unit 301 is configured to receive a Radio Resource Control (RRC) reconfiguration message sent by a first network node, when Multimedia Broadcast Multicast Service (MBMS) service data packets sent by the first network node are received through a multicast bearer and the UE is in a connected state.

The second processing unit 302 is configured to reconstruct an MBMS Packet Data Convergence Protocol (MBMS PDCP) entity according to the RRC reconfiguration message.

The third processing unit 303 is configured to send a reconfiguration completion message to the first network node so that the first network node converts the multicast bearer to a unicast bearer, and sends the MBMS service data packets to the UE through the unicast bearer, the reconfiguration completion message being configured to characterize that reconstruction of the MBMS PDCP entity is accomplished by the UE.

The fourth processing unit 304 is configured to receive the MBMS service data packets sent by the first network node through the unicast bearer.

Optionally, the configuration of the RRC reconfiguration message includes at least one of the following:
the RRC reconfiguration message includes Data Radio Bearer (DRB) configuration information or Multicast Radio Bearer (MRB) configuration information, the DRB corresponding to the DRB configuration information is in an active state, and the MRB corresponding to the MRB configuration information is in an active state;
the RRC reconfiguration message includes DRB configuration information and MRB configuration information, the DRB corresponding to the DRB configuration information is in an active state, and the MRB corresponding to the MRB configuration information is in an inactive state; and
the RRC reconfiguration message includes DRB configuration information and MRB configuration information, the DRB corresponding to the DRB configuration information is in an inactive state, and the MRB corresponding to the MRB configuration information is in an active state.

Optionally, the second processing unit 302 is configured to construct data packets of a multicast PDCP PDU buffer that are not received by the UE according to the RRC reconfiguration message; and to store disordered Service Data Units (SDUs) of the multicast PDCP buffer to a unicast PDCP buffer reconstructed by the UE.

Optionally, when the MBMS service data packets sent by the first network node that are received through the unicast bearer include the corresponding PDCP PDUs, the method further comprises:
processing, via a unicast key and/or a unicast compression mode, the PDCP PDUs corresponding to the MBMS service data packets sent by the first network node through the unicast bearer to obtain the PDCP SDUs.

Optionally, the RRC reconfiguration message includes a bearer conversion indication, which is configured to implicitly indicate to perform the conversion of the multicast bearer to the unicast bearer by configuring a configuration relationship of mapping from an MBMS session to the DRB, or to carry explicit information indicating to perform the conversion of the multicast bearer to the unicast bearer.

It should be noted here that the above apparatus according to embodiments of the present invention can achieve all method steps implemented in embodiments of the above method, and can achieve the same technical effects, and the same parts and beneficial effects in the present embodiment as the method embodiment will not be specifically detailed herein.

Based on the same inventive concept of the aforementioned embodiments, an embodiment of the present disclosure also provides a unicast multicast conversion apparatus, applied to a first network node, which apparatus has a schematic structure as shown in FIG. 12, and the unicast multicast conversion apparatus 40 includes a fifth processing unit 401, a sixth processing unit 402, a seventh processing unit 403, and an eighth processing unit 404.

The fifth processing unit 401 is configured to send a Radio Resource Control (RRC) reconfiguration message to a User Equipment (UE) so that the UE reconstructs a Multimedia Broadcast Multicast Service Packet Data Convergence Protocol (MBMS PDCP) entity according to the RRC reconfiguration message.

The sixth processing unit 402 is configured to receive a reconfiguration completion message sent by the UE, the reconfiguration completion message being configured to characterize that reconstruction of the MBMS PDCP entity is accomplished by the UE.

The seventh processing unit 403 is configured to reconstruct a unicast PDCP entity according to the reconfiguration completion message, and to convert a multicast bearer to a unicast bearer.

The eighth processing unit 404 is configured to send the MBMS service data packets to the UE through the unicast bearer.

Optionally, before sending the RRC reconfiguration message to the UE, the method further comprises:
acquiring first information; and
determining to convert the multicast bearer to the unicast bearer based on the first information, the first information including at least one of the following: the number of UEs, bearer conditions of UEs, and reception status of the MBMS service data packets of UEs, the UE being a UE that receives the MBMS service data packet sent by the first network node.

Optionally, the reconfiguration completion message includes data packets that not received by the UE.

Optionally, before the sending the MBMS service data packets to the UE through the unicast bearer, the method further comprises:
processing, via a unicast key and/or a unicast compression mode, PDCP Service Data Units (SDUs) corresponding to the MBMS service data packets sent through the unicast bearer to obtain PDCP Protocol Data Units (PDUs);
the sending the MBMS service data packets to the UE through the unicast bearer comprises:
   sending the PDCP PDUs to the UE through the unicast bearer.

Optionally, sending the RRC reconfiguration message to the UE includes at least one of the following:
sending the RRC reconfiguration message to the UE via a RRC signaling;
sending the RRC reconfiguration message to the UE via a PDCP control signaling;
sending the RRC reconfiguration message to the UE via a Media Access Control Control Element (MAC CE); and
sending the RRC reconfiguration message to the UE via a control signaling of a physical layer;
wherein the RRC reconfiguration message comprises a bearer conversion indication.

It should be noted here that the above apparatus according to embodiments of the present invention can achieve all method steps implemented in embodiments of the above method, and can achieve the same technical effects, and the same parts and beneficial effects in the present embodiment as the method embodiment will not be specifically detailed herein.

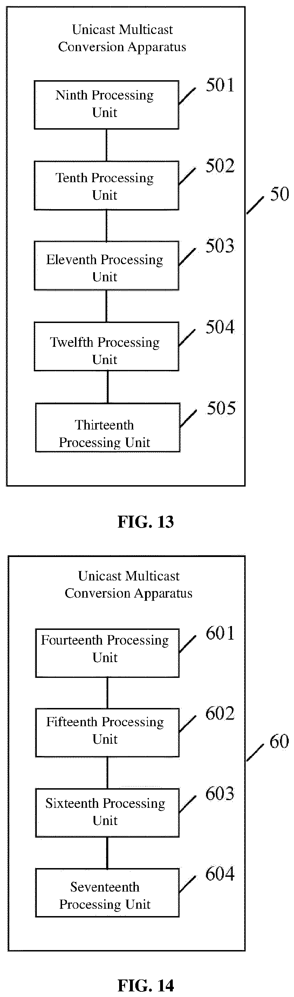

Based on the same inventive concept of the aforementioned embodiments, an embodiment of the present disclosure also provides a unicast multicast conversion apparatus, applied to a User Equipment (UE), which apparatus has a schematic structure as shown in FIG. 13, and the unicast multicast conversion apparatus 50 includes a ninth processing unit 501, a tenth processing unit 502, an eleventh processing unit 503, a twelfth processing unit 504, and a thirteenth processing unit 505.

The ninth processing unit 501 is configured to switch from a second network node to a third network node, when Multimedia Broadcast Multicast Service (MBMS) service data packets sent by the second network node are received through a multicast bearer and the UE is in a connected state.

The tenth processing unit 502 is configured to receive a Radio Resource Control (RRC) reconfiguration message sent by the third network node.

The eleventh processing unit 503 is configured to reconstruct an MBMS Packet Data Convergence Protocol (MBMS PDCP) entity according to the RRC reconfiguration message.

The twelfth processing unit 504 is configured to send a reconfiguration completion message to the third network node so that the third network node converts the multicast bearer to a unicast bearer, and sends the MBMS service data packets to the UE through the unicast bearer, the reconfiguration completion message being configured to characterize that reconstruction of the MBMS PDCP entity is accomplished by the UE.

The thirteenth processing unit 505 is configured to receive the MBMS service data packets sent by the third network node through the unicast bearer.

Optionally, the configuration of the RRC reconfiguration message includes at least one of the following:
the RRC reconfiguration message includes Data Radio Bearer (DRB) configuration information or Multicast Radio Bearer (MRB) configuration information, the DRB corresponding to the DRB configuration information is in an active state, and the MRB corresponding to the MRB configuration information is in an active state;
the RRC reconfiguration message includes DRB configuration information and MRB configuration information, the DRB corresponding to the DRB configuration information is in an active state, and the MRB corresponding to the MRB configuration information is in an inactive state; and
the RRC reconfiguration message includes DRB configuration information and MRB configuration information, the DRB corresponding to the DRB configuration information is in an inactive state, and the MRB corresponding to the MRB configuration information is in an active state.

Optionally, the second network node and the third network node are at least one Distributed Unit (DU) in the same base station respectively, and the at least one DU corresponds to at least one cell; or the second network node and the third network node are different base stations.

It should be noted here that the above apparatus according to embodiments of the present invention can achieve all method steps implemented in embodiments of the above method, and can achieve the same technical effects, and the same parts and beneficial effects in the present embodiment as the method embodiment will not be specifically detailed herein.

Based on the same inventive concept of the aforementioned embodiments, an embodiment of the present disclosure also provides a unicast multicast conversion apparatus, applied to a third network node, which apparatus has a schematic structure as shown in FIG. 14, and the unicast multicast conversion apparatus 60 includes a fourteenth processing unit 601, a fifteenth processing unit 602, a sixteenth processing unit 603, and a seventeenth processing unit 604.

The fourteenth processing unit 601 is configured to send a Radio Resource Control (RRC) reconfiguration message to a User Equipment (UE) so that the UE reconstructs a Multimedia Broadcast Multicast Service Packet Data Convergence Protocol (MBMS PDCP) entity according to the RRC reconfiguration message.

The fifteenth processing unit 602 is configured to receive a reconfiguration completion message sent by the UE, the reconfiguration completion message being configured to characterize that reconstruction of the MBMS PDCP entity is accomplished by the UE.

The sixteenth processing unit 603 is configured to reconstruct a unicast PDCP entity according to the reconfiguration completion message, and to convert a multicast bearer to a unicast bearer.

The seventeenth processing unit 604 configured to send the MBMS service data packets to the UE through the unicast bearer.

Optionally, before sending the RRC reconfiguration message to the UE, the method further comprises:
acquiring second information; and
determining to convert the multicast bearer to the unicast bearer based on the second information, the first information including at least one of the following: the number of UEs, bearer conditions of UEs, and reception status of the MBMS service data packets of UEs, the UE being a UE that receives the MBMS service data packet sent by the third network node.

It should be noted here that the above apparatus according to embodiments of the present invention can achieve all method steps implemented in embodiments of the above method, and can achieve the same technical effects, and the same parts and beneficial effects in the present embodiment as the method embodiment will not be specifically detailed herein.

It should be noted that the dividing of the units in embodiments of the present disclosure is schematic and is only a logical functional division, and there may be other dividing ways in actual implementations. In addition, respective functional units in various embodiments of the present disclosure may be integrated in one processing unit, or each unit may be physically present separately, or two or more units may be integrated in one unit. The above integrated units may be implemented in the form of hardware, and also may be implemented in the form of software functional units.

Said integrated units may be stored in one processor-readable storage medium when implemented in the form of software functional units and sold or used as a separate product. Based on such understanding, the technical solution of the present disclosure, or part that contributes to the related art, or all or part of the technical solution, essentially may be embodied in the form of a software product stored in a storage medium and including serval instructions to cause a computer device (which may be a personal computer, server, or network device, etc.) or processor to perform all or some of the steps of the method described in various embodiments of the present disclosure. The aforementioned storage media include various media that may store program code, such as a USB flash drive, mobile hard disk, read-only memory (ROM), random access memory (RAM), disk or CD-ROM.

Based on the same inventive concept, an embodiment of the present disclosure also provides a processor-readable storage medium storing a computer program that is used to embody any of the steps of any one of the unicast multicast conversion methods according to any of the embodiments of the present disclosure or any optional implementation when executed by a processor.

The processor-readable storage medium may be any available medium or data storage device accessible by the processor, including but not limited to magnetic memory (e.g., floppy disk, hard disk, magnetic tape, magnetic optical disk (MO), etc.), optical memory (e.g., CD, DVD, BD, HVD, etc.), and semiconductor memory (e.g., ROM, EPROM, EEPROM, non-volatile memory (NAND FLASH), solid state drive (SSD)), and so on.

Those skilled in the art should understand that embodiments of the present disclosure may be provided as methods, systems, or computer program products. Accordingly, the present disclosure may take the form of a full hardware embodiment, a full software embodiment, or an embodiment combining software and hardware aspects. Further, the present disclosure may take the form of a computer program product implemented on one or more computer usable storage media (including, but not limited to, disk memory and optical memory, etc.) containing computer usable program code therein.

The present disclosure is described with reference to flowcharts and/or block diagrams of methods, devices (systems), and computer program products according to embodiments of the present disclosure. It is to be understood that each process and/or block in the flowchart and/or block diagram, and the combination of processes and/or blocks in the flowchart and/or block diagram, may be implemented by computer-executable instructions. These computer-executable instructions may be provided to a processor of a general-purpose computer, a specialized computer, an embedded machine, or other programmable data processing device to produce a machine, such that instructions executed by the processor of the computer or other programmable data processing device produce a means for implementing a function specified in one or more processes of the flowchart and/or one or more blocks of the block diagram.

These processor-executable instructions may also be stored in a processor-readable memory capable of directing the computer or other programmable data processing device to operate in a particular manner such that the instructions stored in the processor-readable memory produce an article of manufacture including an instruction means that implements the function specified in one or more processes of the flowcharts and/or one or more blocks of the block diagrams.

These processor-executable instructions may also be loaded onto a computer or other programmable data processing device such that a series of operational steps are performed on the computer or other programmable device to produce computer-implemented processing such that the instructions executed on the computer or other programmable device provide steps for implementing the function specified in one or more processes of the flowcharts and/or one or more blocks of the block diagrams.

Obviously, those skilled in the art may make various modifications and variations of the present disclosure without departing from the scope of the present invention, which is defined by the appended claims. Thus, if these modifications and variations of the present disclosure fall within the scope of the claims of the present disclosure then the present disclosure is also intended to include them.

## Claims

1. A unicast multicast conversion method performed by User Equipment, UE, comprising:
receiving (S101) a Radio Resource Control, RRC, reconfiguration message sent by a first network node, in case that Multimedia Broadcast Multicast Service, MBMS, service data packets sent by the first network node are received through a multicast bearer;
reconstructing (S102) a Multimedia Broadcast Multicast Service Packet Data Convergence Protocol, MBMS PDCP, entity according to the RRC reconfiguration message, wherein the multicast bearer is converted to a unicast bearer;
sending (S103) a reconfiguration completion message to the first network node so that the first network node converts the multicast bearer to a unicast bearer and sends the MBMS service data packets to the UE through the unicast bearer, the reconfiguration completion message being configured to characterize that reconstruction of the MBMS PDCP entity is accomplished by the UE; and
receiving (S104) the MBMS service data packets sent by the first network node through the unicast bearer,
wherein, the reconstructing the MBMS PDCP entity according to the RRC reconfiguration message comprises:
constructing data packets of multicast PDCP PDU that are not received by the UE according to the RRC reconfiguration message; and storing disordered Service Data Units, SDUs, of a multicast PDCP buffer to a unicast PDCP buffer reconstructed by the UE.

2. The method of claim 1, wherein a configuration mode of the RRC reconfiguration message comprises at least one of the following:
the RRC reconfiguration message comprising Data Radio Bearer, DRB, configuration information or Multicast Radio Bearer, MRB, configuration information, the DRB corresponding to the DRB configuration information is in an active state, and the MRB corresponding to the MRB configuration information is in an active state;
the RRC reconfiguration message comprising DRB configuration information and MRB configuration information, the DRB corresponding to the DRB configuration information is in an active state, and the MRB corresponding to the MRB configuration information is in an inactive state; and
the RRC reconfiguration message comprising DRB configuration information and MRB configuration information, the DRB corresponding to the DRB configuration information is in an inactive state, and the MRB corresponding to the MRB configuration information is in an active state.

3. The method of claim 1, wherein, when the MBMS service data packets sent by the first network node received through the unicast bearer include the corresponding PDCP PDUs, the method further comprises:
processing, via a unicast key and/or a unicast compression mode, the PDCP PDUs corresponding to the MBMS service data packets sent by the first network node through the unicast bearer to obtain the PDCP SDUs.

4. The method of claim 1, wherein the RRC reconfiguration message comprises a bearer conversion indication, which is configured to implicitly indicate to perform a conversion of the multicast bearer to the unicast bearer by configuring a configuration relationship of mapping from an MBMS session to the DRB, or to carry explicit information indicating to perform a conversion of the multicast bearer to the unicast bearer.

5. A unicast multicast conversion method performed by a network node, comprising:
in case that Multimedia Broadcast Multicast Service, MBMS, service data packets sent by the network node are received by a User Equipment, UE, through a multicast bearer, sending (S201, S401) a Radio Resource Control, RRC, reconfiguration message to the UE, the RRC reconfiguration message is configured for the UE to reconstruct an MBMS Packet Data Convergence Protocol, PDCP, entity;
receiving (S202, S402) a reconfiguration completion message sent by the UE, the reconfiguration completion message being configured to characterize that reconstruction of the MBMS PDCP entity is accomplished by the UE;
reconstructing (S203, S403), a unicast PDCP entity according to data packets that are not received by the UE included in the reconfiguration completion message, and retransmitting corresponding PDCP Service Data Units (SDUs), converting a multicast bearer to a unicast bearer; and
sending (S204, S404) MBMS service data packets to the UE through the unicast bearer,
wherein the RRC reconfiguration message includes a bearer conversion indication for indicating to perform a bearer handover.

6. The method of claim 5, wherein, before sending (S201, S401), by the network node, the RRC reconfiguration message to the UE, the method further comprises:
acquiring first information; and
determining to convert the multicast bearer to the unicast bearer based on the first information, wherein the first information comprises at least one of the number of UEs, bearer conditions of UEs, or reception status of the MBMS service data packets of UEs, the UE being a UE that receives the MBMS service data packet sent by the network node.

7. The method of claim 5, wherein, before sending (S204), by the network node, the MBMS service data packets to the UE through the unicast bearer, the method further comprises:
processing, via a unicast key and/or a unicast compression mode, PDCP SDUs corresponding to the MBMS service data packets sent through the unicast bearer to obtain PDCP PDUs;
wherein sending the MBMS service data packets to the UE through the unicast bearer comprises:
sending the PDCP PDUs to the UE through the unicast bearer.

8. The method of claim 5, wherein sending (S201), by the network node, the RRC reconfiguration message to the UE comprises at least one of the following:
sending the RRC reconfiguration message to the UE via an RRC signaling;
sending the RRC reconfiguration message to the UE via a Packet Data Convergence Protocol, PDCP, control signaling;
sending the RRC reconfiguration message to the UE via a Media Access Control Control Element, MAC CE; and
sending the RRC reconfiguration message to the UE via a control signaling of a physical layer;
wherein the RRC reconfiguration message comprises a bearer conversion indication.

9. A unicast multicast conversion apparatus, comprising a memory (1120), a transceiver (1100), and a processor (1110):
the memory (1120) is configured to store a computer program; the transceiver (1100) is configured to send and receive data under the control of the processor (1110); the processor (1110) is configured to read the computer program in the memory (1120) and perform the method of any one of claims 1 to 4.

10. A unicast multicast conversion apparatus, comprising a memory (1220, 1420), a transceiver (1200, 1400), and a processor (1210, 1410):
the memory (1220, 1420) is configured to store a computer program; the transceiver (1200, 1400) is configured to send and receive data under the control of the processor (1210, 1410); the processor (1210, 1410) is configured to read the computer program in the memory (1220, 1420) and perform the method of any one of claims 5 to 8.

11. A processor-readable storage medium, having stored therein a computer program that, when executed by a processor, causes the processor to perform the method of any one of claims 1 to 8.

## Patentansprüche

1. Unicast-Multicast-Umwandlungsverfahren, das durch eine Benutzereinrichtung, UE, durchgeführt wird, umfassend:
Empfangen (S101) einer Funkressourcensteuerungs-Rekonfigurationsnachricht, RRC-Rekonfigurationsnachricht, die durch einen ersten Netzwerkknoten gesendet wird, für den Fall, dass Multimedia-Broadcast-Multicast-Dienst-Dienstdatenpakete, MBMS-Dienstdatenpakete, die durch den ersten Netzwerkknoten gesendet werden, über einen Multicast-Träger empfangen werden;
Rekonstruieren (S102) einer Multimedia-Broadcast-Multicast-Dienst-Paketdatenkonvergenzprotokoll-Entität, MBMS-PDCP-Entität, gemäß der RRC-Rekonfigurationsnachricht, wobei der Multicast-Träger in einen Unicast-Träger umgewandelt wird;
Senden (S103) einer Rekonfigurationsabschlussnachricht an den ersten Netzwerkknoten, sodass der erste Netzwerkknoten den Multicast-Träger in einen Unicast-Träger umwandelt und die MBMS-Dienstdatenpakete über den Unicast-Träger an die UE sendet, wobei die Rekonfigurationsabschlussnachricht konfiguriert ist, um **zu kennzeichnen, dass** die Rekonstruktion der MBMS-PDCP-Entität durch die UE erzielt wird; und
Empfangen (S104) der MBMS-Dienstdatenpakete, die durch den ersten Netzwerkknoten über den Unicast-Träger gesendet werden,
wobei das Rekonstruieren der MBMS-PDCP-Entität gemäß der RRC-Rekonfigurationsnachricht umfasst:
Erstellen von Datenpaketen einer Multicast-PDCP-PDU, die gemäß der RRC-Rekonfigurationsnachricht nicht durch die UE empfangen werden; und Speichern ungeordneter Dienstdateneinheiten, SDUs, eines Multicast-PDCP-Puffers in einen Unicast-PDCP-Puffer, der durch die UE rekonstruiert wird.

2. Verfahren nach Anspruch 1, wobei ein Konfigurationsmodus der RRC-Rekonfigurationsnachricht mindestens eines der Folgenden umfasst:
die RRC-Rekonfigurationsnachricht, umfassend Datenfunkträger-Konfigurationsinformationen, DRB-Konfigurationsinformationen oder Multicast-Funkträger-Konfigurationsinformationen, MRB-Konfigurationsinformationen, wobei sich der DRB, der den DRB-Konfigurationsinformationen entspricht, in einem aktiven Zustand befindet und sich der MRB, der den MRB-Konfigurationsinformationen entspricht, in einem aktiven Zustand befindet;
die RRC-Rekonfigurationsnachricht, umfassend DRB-Konfigurationsinformationen und MRB-Konfigurationsinformationen, wobei der DRB, der den DRB-Konfigurationsinformationen entspricht, in einem aktiven Zustand ist und der MRB, der den MRB-Konfigurationsinformationen entspricht, in einem inaktiven Zustand ist; und
die RRC-Rekonfigurationsnachricht, umfassend DRB-Konfigurationsinformationen und MRB-Konfigurationsinformationen, wobei sich der DRB, der den DRB-Konfigurationsinformationen entspricht, in einem inaktiven Zustand befindet und sich der MRB, der den MRB-Konfigurationsinformationen entspricht, in einem aktiven Zustand befindet.

3. Verfahren nach Anspruch 1, wobei, wenn die MBMS-Dienstdatenpakete, die durch den ersten Netzwerkknoten gesendet werden, über den Unicast-Träger empfangen werden, die entsprechenden PDCP-PDUs einschließen, das Verfahren ferner umfasst:
Verarbeiten, über einen Unicast-Schlüssel und/oder einen Unicast-Komprimierungsmodus, der PDCP-PDUs, die den MBMS-Dienstdatenpaketen entsprechen, die durch den ersten Netzwerkknoten über den Unicast-Träger gesendet werden, um die PDCP-SDUs zu erhalten.

4. Verfahren nach Anspruch 1, wobei die RRC-Rekonfigurationsnachricht eine Trägerumwandlungsanzeige umfasst, die konfiguriert ist, um implizit anzuzeigen, eine Umwandlung des Multicast-Trägers in den Unicast-Träger durch Konfigurieren einer Konfigurationsbeziehung einer Zuordnung von einer MBMS-Sitzung zu dem DRB durchzuführen, oder um explizite Informationen zu tragen, die anzeigen, eine Umwandlung des Multicast-Trägers in den Unicast-Träger durchzuführen.

5. Unicast-Multicast-Umwandlungsverfahren, das durch einen Netzwerkknoten durchgeführt wird, umfassend:
für den Fall, dass Multimedia-Broadcast-Multicast-Dienst-Dienstdatenpakete, MBMS-Dienstdatenpakete, die durch den Netzwerkknoten gesendet werden, durch eine Benutzereinrichtung, UE, über einen Multicast-Träger empfangen werden, Senden (S201, S401) einer Funkressourcensteuerungs-Rekonfigurationsnachricht, RRC-Rekonfigurationsnachricht an die UE, wobei die RRC-Rekonfigurationsnachricht für die UE konfiguriert ist, um eine MBMS-Paketdatenkonvergenzprotokoll-Entität, PDCP-Entität, zu rekonstruieren;
Empfangen (S202, S402) einer Rekonfigurationsabschlussnachricht, die durch die UE gesendet wird, wobei die Rekonfigurationsabschlussnachricht konfiguriert ist, um **zu kennzeichnen, dass** die Rekonstruktion der MBMS-PDCP-Entität durch die UE erzielt wird;
Rekonstruieren (S203, S403) einer Unicast-PDCP-Entität gemäß Datenpaketen, die nicht durch UE empfangen werden, die in der Rekonfigurationsabschlussnachricht eingeschlossen sind, und erneutes Senden entsprechender PDCP-Dienstdateneinheiten (SDUs), Umwandeln eines Multicast-Trägers in einen Unicast-Träger; und
Senden (S204, S404) von MBMS-Dienstdatenpaketen an die UE über den Unicast-Träger,
wobei die RRC-Rekonfigurationsnachricht eine Trägerumwandlungsanzeige zum Anzeigen, eine Trägerübergabe durchzuführen, einschließt.

6. Verfahren nach Anspruch 5, wobei, vor dem Senden (S201, S401), durch den Netzwerkknoten, der RRC-Rekonfigurationsnachricht an die UE, das Verfahren ferner umfasst:
Erfassen erster Informationen; und
Bestimmen, den Multicast-Träger basierend auf den ersten Informationen in den Unicast-Träger umzuwandeln, wobei die ersten Informationen mindestens eines von der Anzahl von UEs, Trägerbedingungen von UEs oder einen Empfangsstatus der MBMS-Dienstdatenpakete von UEs umfasst, wobei die UE eine UE ist, die das MBMS-Dienstdatenpaket empfängt, das durch den Netzwerkknoten gesendet wird.

7. Verfahren nach Anspruch 5, wobei, vor dem Senden (S204), durch den Netzwerkknoten, der MBMS-Dienstdatenpakete an die UE über den Unicast-Träger, das Verfahren ferner umfasst:
Verarbeiten, mittels eines Unicast-Schlüssels und/oder eines Unicast-Komprimierungsmodus, von PDCP-SDUs, die den MBMS-Dienstdatenpaketen entsprechen, die über den Unicast-Träger gesendet werden, um PDCP-PDUs zu erhalten;
wobei das Senden der MBMS-Dienstdatenpakete an die UE über den Unicast-Träger umfasst:
Senden der PDCP-PDUs an die UE über den Unicast-Träger.

8. Verfahren nach Anspruch 5, wobei das Senden (S201), durch den Netzwerkknoten, der RRC-Rekonfigurationsnachricht an die UE mindestens eines der Folgenden umfasst:
Senden der RRC-Rekonfigurationsnachricht an die UE über eine RRC-Signalisierung;
Senden der RRC-Rekonfigurationsnachricht an die UE über eine Paketdatenkonvergenzprotokoll-Steuersignalisierung, PDCP-Steuersignalisierung;
Senden der RRC-Rekonfigurationsnachricht an die UE über ein Medienzugriffssteuerungs-Steuerelement, MAC CE; und
Senden der RRC-Rekonfigurationsnachricht an die UE über eine Steuersignalisierung einer Bitübertragungsschicht;
wobei die RRC-Rekonfigurationsnachricht eine Trägerumwandlungsanzeige umfasst.

9. Unicast-Multicast-Umwandlungsvorrichtung, umfassend einen Speicher (1120), einen Sendeempfänger (1100) und einen Prozessor (1110):
wobei der Speicher (1120) konfiguriert ist, um ein Computerprogramm zu speichern; der Sendeempfänger (1100) konfiguriert ist, um unter der Steuerung des Prozessors (1110) Daten zu senden und zu empfangen; der Prozessor (1110) konfiguriert ist, um das Computerprogramm in dem Speicher (1120) zu lesen und das Verfahren nach einem der Ansprüche 1 bis 4 durchzuführen.

10. Unicast-Multicast-Umwandlungsvorrichtung, umfassend einen Speicher (1220, 1420), einen Sendeempfänger (1200, 1400) und einen Prozessor (1210, 1410):
wobei der Speicher (1220, 1420) konfiguriert ist, um ein Computerprogramm zu speichern; der Sendeempfänger (1200, 1400) konfiguriert ist, um unter der Steuerung des Prozessors (1210, 1410) Daten zu senden und zu empfangen; der Prozessor (1210, 1410) konfiguriert ist, um das Computerprogramm in dem Speicher (1220, 1420) zu lesen und das Verfahren nach einem der Ansprüche 5 bis 8 durchzuführen.

11. Prozessorlesbares Speicherungsmedium, das ein Computerprogramm darin gespeichert aufweist, das, wenn es durch einen Prozessor ausgeführt wird, den Prozessor veranlasst, das Verfahren nach einem der Ansprüche 1 bis 8 durchzuführen.

## Revendications

1. Procédé de conversion monodiffusion/multidiffusion réalisé par un équipement utilisateur, UE, comprenant :
la réception (S101) d'un message de reconfiguration de commande de ressources radio, RRC, envoyé par un premier nœud de réseau, dans le cas où les paquets de données de service du service de multidiffusion et radiodiffusion multimédia, MBMS, envoyés par le premier nœud de réseau sont reçus par le biais d'un support de multidiffusion ;
la reconstruction (S102) d'une entité de protocole de convergence des données en paquets pour le service de multidiffusion et radiodiffusion multimédia, MBMS PDCP, selon le message de reconfiguration de RRC, le support de multidiffusion étant converti en support de monodiffusion ;
l'envoi (S103) d'un message d'achèvement de reconfiguration au premier nœud de réseau de sorte que le premier nœud de réseau convertisse le support de multidiffusion en support de monodiffusion et envoie les paquets de données de service MBMS à l'UE par le biais du support de monodiffusion, le message d'achèvement de reconfiguration étant configuré pour **caractériser le fait que** la reconstruction de l'entité PDCP MBMS est accomplie par l'UE ; et
la réception (S104) des paquets de données de service MBMS envoyés par le premier nœud de réseau par le biais du support de monodiffusion,
dans lequel, la reconstruction de l'entité PDCP MBMS selon le message de reconfiguration de RRC comprend :
la construction de paquets de données de PDU PDCP de multidiffusion qui ne sont pas reçus par l'UE selon le message de reconfiguration RRC ; et le stockage d'unités de données de service, SDU, désordonnées d'un tampon PDCP de multidiffusion sur un tampon PDCP de monodiffusion reconstruit par l'UE.

2. Procédé selon la revendication 1, dans lequel un mode de configuration du message de reconfiguration de RRC comprend au moins l'un des éléments suivants :
le message de reconfiguration de RRC comprenant des informations de configuration de support radio de données, DRB, ou des informations de configuration de support radio de multidiffusion, MRB, le DRB correspondant aux informations de configuration de DRB est dans un état actif, et le MRB correspondant aux informations de configuration de MRB est dans un état actif ;
le message de reconfiguration de RRC comprenant des informations de configuration de DRB et des informations de configuration de MRB, le DRB correspondant aux informations de configuration de DRB est dans un état actif, et le MRB correspondant aux informations de configuration de MRB est dans un état inactif ; et
le message de reconfiguration de RRC comprenant des informations de configuration de DRB et des informations de configuration de MRB, le DRB correspondant aux informations de configuration de DRB est dans un état inactif, et le MRB correspondant aux informations de configuration de MRB est dans un état actif.

3. Procédé selon la revendication 1, dans lequel, lorsque les paquets de données de service MBMS envoyés par le premier nœud de réseau reçus par le biais du support de monodiffusion comportent les PDU PDCP correspondantes, le procédé comprend en outre :
le traitement, par le biais d'une clé de monodiffusion et/ou d'un mode de compression de monodiffusion, des PDU PDCP correspondant aux paquets de données de service MBMS envoyés par le premier nœud de réseau par le biais du support de monodiffusion pour obtenir les SDU PDCP.

4. Procédé selon la revendication 1, dans lequel le message de reconfiguration de RRC comprend une indication de conversion de support, qui est configurée pour indiquer implicitement d'effectuer une conversion du support de multidiffusion en support de monodiffusion en configurant une relation de configuration de mappage d'une session MBMS par rapport au DRB, ou pour transporter des informations explicites indiquant d'effectuer une conversion du support de multidiffusion en support monodiffusion.

5. Procédé de conversion monodiffusion/multidiffusion effectué par un nœud de réseau, comprenant :
dans le cas où des paquets de données de service du service de multidiffusion et radiodiffusion multimédia, MBMS, envoyés par le nœud de réseau sont reçus par un équipement utilisateur, UE, par le biais d'un support de multidiffusion, l'envoi (S201, S401) d'un message de reconfiguration de commande de ressources radio, RRC, à l'UE, le message de reconfiguration de RRC est configuré pour que l'UE reconstruise une entité de protocole de convergence de données de paquets, PDCP, MBMS ;
la réception (S202, S402) d'un message d'achèvement de reconfiguration envoyé par l'UE, le message d'achèvement de reconfiguration étant configuré pour **caractériser le fait que** la reconstruction de l'entité PDCP MBMS est accomplie par l'UE ;
la reconstruction (S203, S403) d'une entité PDCP de monodiffusion selon des paquets de données qui ne sont pas reçus par l'UE inclus dans le message d'achèvement de reconfiguration, et la réémission d'unités de données de service (SDU) PDCP correspondantes, convertissant un support de multidiffusion en support de monodiffusion ; et
l'envoi (S204, S404) de paquets de données de service MBMS à l'UE par le biais du support de monodiffusion,
dans lequel le message de reconfiguration de RRC comporte une indication de conversion de support pour indiquer d'effectuer un transfert cellulaire de support.

6. Procédé selon la revendication 5, dans lequel, avant l'envoi (S201, S401), par le nœud de réseau, du message de reconfiguration de RRC à l'UE, le procédé comprend en outre :
l'acquisition de premières informations ; et
la détermination qu'il faut convertir le support de multidiffusion en support de monodiffusion en fonction des premières informations, dans lequel les premières informations comprennent au moins l'un parmi le nombre d'UE, les conditions de support des UE et l'état de réception des paquets de données de service MBMS des UE, l'UE étant un UE qui reçoit le paquet de données de service MBMS envoyé par le nœud de réseau.

7. Procédé selon la revendication 5, dans lequel, avant l'envoi (S204), par le nœud de réseau, des paquets de données de service MBMS à l'UE par le biais du support de monodiffusion, le procédé comprend en outre :
le traitement, par le biais d'une clé de monodiffusion et/ou d'un mode de compression de monodiffusion, de SDU PDCP correspondant aux paquets de données de service MBMS envoyés par le biais du support de monodiffusion pour obtenir des PDU PDCP ;
dans lequel l'envoi des paquets de données de service MBMS à l'UE par le biais du support de monodiffusion comprend :
l'envoi des PDU PDCP à l'UE par le biais du support de monodiffusion.

8. Procédé selon la revendication 5, dans lequel l'envoi (S201), par le nœud de réseau, du message de reconfiguration de RRC à l'UE comprend au moins l'un des éléments suivants :
l'envoi du message de reconfiguration RRC à l'UE par le biais d'une signalisation RRC ;
l'envoi du message de reconfiguration de RRC à l'UE par le biais d'une signalisation de commande de protocole de convergence de données de paquets, PDCP ;
l'envoi du message de reconfiguration de RRC à l'UE par le biais d'un élément de commande de contrôle d'accès au support, MAC CE ; et
l'envoi du message de reconfiguration de RRC à l'UE par le biais d'une signalisation de commande d'une couche physique ;
dans lequel le message de reconfiguration RRC comprend une indication de conversion de support.

9. Appareil de conversion monodiffusion/multidiffusion, comprenant une mémoire (1120), un émetteur-récepteur (1100) et un processeur (1110) :
dans lequel la mémoire (1120) est configurée pour stocker un programme informatique ; l'émetteur-récepteur (1100) est configuré pour émettre et recevoir des données sous la commande du processeur (1110) ; le processeur (1110) est configuré pour lire le programme informatique dans la mémoire (1120) et réaliser le procédé selon l'une quelconque des revendications 1 à 4.

10. Appareil de conversion monodiffusion/multidiffusion, comprenant une mémoire (1220, 1420), un émetteur-récepteur (1200, 1400) et un processeur (1210, 1410) :
la mémoire (1220, 1420) est configurée pour stocker un programme informatique ; l'émetteur-récepteur (1200, 1400) est configuré pour envoyer et recevoir des données sous la commande du processeur (1210, 1410) ; le processeur (1210, 1410) est configuré pour lire le programme informatique dans la mémoire (1220, 1420) et réaliser le procédé selon l'une quelconque des revendications 5 à 8.

11. Support de stockage lisible par processeur dans lequel est stocké un programme informatique qui, lorsqu'il est exécuté par un processeur, amène le processeur à réaliser le procédé selon l'une quelconque des revendications 1 à 8.
